# EUROPEAN PATENT APPLICATION

(11) **EP 4 546 862 A1**
(43) Date of publication of application: **30.04.2025**
(21) Application number: 24161132.6
(22) Date of filing: 04.03.2024
(51) Int. Cl.: H04W 24/10, H04W 84/12, H04W 48/20

(54) **STATION APPARATUS, ACCESS POINT APPARATUS, AND COMMUNICATION METHOD**

(30) Priority: 25.10.2023 JP 2023183342
(71) Applicant: Sharp Kabushiki Kaisha, Sakai City Osaka 590-8522 (JP)
(72) Inventor: SHIRAKAWA, Atsushi, Sakai City, Osaka, 590-8522 (JP); YAMADA, Ryota, Sakai City, Osaka, 590-8522 (JP); TOMEBA, Hiromichi, Sakai City, Osaka, 590-8522 (JP)
(74) Representative: Müller Hoffmann & Partner

(57) **Abstract**

Object

There is a problem that, in a case that a wireless LAN station apparatus moves after measurement is performed, a Multi-AP cooperative operation is performed based on inaccurate information.

Solution

A wireless LAN station apparatus reports, to a wireless LAN access point apparatus, information necessary for an inter-access-point-apparatus cooperative operation in a Multi-AP wireless communication system without being solicited by the wireless LAN access point apparatus.

## Description

### Technical Field

The present invention relates to a station apparatus, an access point apparatus, and a communication method.

### Background Art

The specification of IEEE 802.11be for realizing even higher speeds than in IEEE 802.11, which is a wireless Local Area Network (LAN) standard, has been standardized by the Institute of Electrical and Electronics Engineers Inc. (IEEE), and wireless LAN devices conforming to the specification draft have emerged on the market. Activities for standardizing IEEE 802.1 1bn as a standard subsequent to IEEE 802.11be are scheduled to start within years. The main theme in the standardization of IEEE 802.1 1bn is realization of Ultra High Reliability (UHR).

In a wireless LAN, frames can be transmitted in unlicensed bands in which wireless communication is enabled without permission (license) from a country or a region. For applications for individuals including an application for households, Internet access from residences has been wirelessly established by, for example, including the wireless LAN access point function in a line termination apparatus for connection to a Wide Area Network (WAN) line such as the Internet or connecting a wireless LAN access point apparatus (also referred to as an "access point apparatus") to the line termination apparatus. In other words, wireless LAN station apparatuses (also referred to as "station apparatuses") such as smartphones and personal computers can connect to wireless LAN access point apparatuses to access the Internet. At the beginning of introduction of a wireless LAN into homes, the number of wireless LAN access point apparatuses in a residence was only one in most cases, but recently, multiple wireless LAN access point apparatuses have been introduced, and the coverage of a wireless LAN use area in a residence has expanded. In particular, for personal applications, a wireless LAN mesh network in which wireless communication is performed between wireless LAN access point apparatuses (backhaul) is preferred in order to simplify network construction. On the other hand, for enterprise applications, wired connection such as Ethernet (registered trade name) between wireless LAN access point apparatuses is preferred in order to improve reliability in frame transmission. However, since the superiority and inferiority of communication performance and the degree of complexity of device installation have a trade-off relationship, it may be determined whether the form of connection of the wireless LAN access point apparatuses should be made wireless or wired according to use cases in consideration of the balance.

On the other hand, in the United States, the 6 GHz band (5.925 to 7.125 GHz) is set to be used as an unlicensed band, and in Europe and Japan, the lower frequencies (5.925 to 6.425 GHz) in the 6 GHz band are allowed to be used, and use of the upper frequencies (6.425 to 7.125 GHz) has also been under study. Similar studies have been conducted in other countries in the world. This means that it is expected that the 6 GHz band will be available for wireless LANs, in addition to the 2.4 GHz band and 5 GHz band. In order to support the expansion of target frequencies, the Wi-Fi Alliance is attempting to standardize Wi-Fi 6E (trade name) which is an extended version of Wi-Fi 6, to make the 6 GHz band available.

To be precise, the 6 GHz band corresponds to frequency bands of 5.925 to 7.125 GHz, and a bandwidth of about 1.2 GHz in total has become newly available, that is, there is an increase of 14 channels, each of which is equivalent to 80 MHz of bandwidth, or 7 channels, each of which is equivalent to 160 MHz of bandwidth. Since this makes a sufficient number of frequency resources available, the maximum channel bandwidth available with a single wireless LAN communication system (equivalent to a BSS to be described below) expands from 160 MHz in IEEE 802.11ax to double, which is 320 MHz, in IEEE 802.11be.

While the 2.4 GHz band provides a relatively large coverage (communication range), it has a relatively narrow available bandwidth, leading to a significant effect of interference between communication apparatuses. While the 5 GHz band and the 6 GHz band provide large communication bandwidths, the bands do not provide a wide coverage. For those reasons, to implement a variety of service applications on a wireless LAN, it is desirable that frequency bands (2.4 GHz band, 5 GHz band, 6 GHz band, and the like, or channels included in each frequency band or subchannels included in the channels) to be used depending on a use case be bundled up or switched between for use. However, it is not possible for wireless LAN communication apparatuses of the related art to bundle up and use different frequency bands (2.4 GHz band, 5 GHz band, 6 GHz band, etc.) to be used for communication. In addition, in order to switch frequency bands (2.4 GHz band, 5 GHz band, 6 GHz band, etc.), the current frequency band needs to be disconnected first and reconnection to another frequency band made.

Thus, IEEE 802.11be has standardized Multi-Link Operation (MLO) in which a communication apparatus uses multiple frequency bands to enable multiple link connections to be maintained. A simultaneous operation of three link connections of a 2.4 GHz band connection, a 5 GHz band connection, and a 6 GHz band connection is exemplified. Of course, combinations of the frequency bands, the channels, and the subchannels and the number of simultaneous connections are not limited to these combinations and may be various. From the perspective of frequency band, millimeter waves (45 GHz band, 60 GHz band, etc.) will also be used as one type of link constituting multi-link in the future. The MLO allows communication apparatuses to maintain multiple link connections requiring different radio resources to be used or different configurations related to communication. That is, by using MLO, the communication apparatuses can simultaneously maintain link connections in different frequency bands. It is possible not only to transmit and/or receive frames by simultaneously using multiple links but also to switch link connections (change a frequency band) for transmitting and/or receiving frames without performing a reconnection operation. Further, a link including multiple links (Multi-Link) is also herein referred to as a physical layer link.

Furthermore, for the standardization of IEEE 802.11bn, discussion has been made on Multi-Access Point (Multi-AP) in which multiple wireless LAN access point apparatuses cooperatively transmit and/or receive frames to and from one wireless LAN station apparatus (see NPL 1). In the related art, basically, a wireless LAN access point apparatus transmits frames in consideration of only a wireless LAN station apparatus connected to the wireless LAN access point apparatus itself. However, in a Multi-AP wireless communication system, a certain first wireless LAN access point apparatus performs a cooperative operation ("cooperative operation" may be referred to as "coordination") with another wireless LAN access point apparatus, and can transmit frames in consideration also of a wireless LAN station apparatus connected to the other wireless LAN access point apparatus. For example, although a wireless LAN access point apparatus (here, referred to as a "BSS-AP") in the related art estimates channel characteristics by using Channel Sounding only for a wireless LAN station apparatus (here, referred to as a "BSS-STA") connected to the wireless LAN access point apparatus itself for Beam Forming or the like, with respect to a wireless LAN access point apparatus in a Multi-AP wireless communication system, another wireless LAN access point apparatus (here, referred to as an "OBSS-AP") needs to estimate channel characteristics by using Channel Sounding for the aforementioned wireless LAN station apparatus (here, a "BSS-STA") as well. In order to cause Multi-AP cooperative operations (also referred to as Multi-AP coordination, inter-access-point-apparatus coordination, or inter-access-point-apparatus cooperative operation) to efficiently work, the aforementioned wireless LAN station apparatus (BSS-STA) estimates channel characteristics by using Channel Sounding with respect to a certain wireless LAN access point apparatus other than a wireless LAN access point apparatus with which an association is established (OBSS-AP) in addition to the wireless LAN access point apparatus with which the association is established. It is also useful for the aforementioned wireless LAN station apparatus (BSS-STA) to acquire reception signal qualities (RSSI, SNR, SINR, CQI, and the like) other than Channel Sounding of a certain wireless LAN access point apparatus other than a wireless LAN access point apparatus with which an association is established (OBSS-AP) in addition to the wireless LAN access point apparatus with which the association is established.

### Citation List

### Non Patent Literature

NPL 1: IEEE 802.11-23/0854-00-0, May 2023

### Summary of Invention

### Technical Problem

Channel characteristics and reception signal qualities formed between a wireless LAN access point apparatus and a wireless LAN station apparatus change due to movement of the wireless LAN station apparatus or movement of a person or an object in the environment. In a case that such a change occurs, it is desired that the method of the cooperative operation between a wireless LAN access point apparatus with which a wireless LAN station apparatus establishes an association and another wireless LAN access point apparatuses also change. In the proposed technique (NPL 1), a wireless LAN access point apparatus serves as a starting point to trigger measurement of channel characteristics and reception signal qualities. However, since it is difficult for the wireless LAN access point apparatus to detect movement of the wireless LAN station apparatus or the like, there is a problem that, when the wireless LAN station apparatus moves after the measurement is performed, a Multi-AP cooperative operation is performed based on inaccurate information.

### Solution to Problem

A station apparatus, an access point apparatus, and a communication method according to the present invention for solving the aforementioned problem are as follows.
(1) That is, a station apparatus according to an aspect of the present invention includes a receiver configured to establish an association with a first access point apparatus and receives frames transmitted by multiple access point apparatuses including the first access point apparatus, and a transmitter that transmits a wireless management frame. The wireless management frame includes received signal quality information generated by measuring each of the frames transmitted by the multiple access point apparatuses as a measured object. The wireless management frame is transmitted as a solicited frame in a case that the received signal quality information is requested from the first access point apparatus. At least one of a first method or a second method is performed in a case that the received signal quality information is not requested from the first access point apparatus. The first method includes issuing, from an MLME to an SME of the station apparatus, a primitive including the received signal quality information. The second method includes transmitting the wireless management frame as an unsolicited frame.
(2) In addition, according to (1) described above with respect to the station apparatus according to an aspect of the present invention, performing the first method and the second method is indicated in a primitive from the SME to the MLME.
(3) In addition, according to (1) described above with respect to the station apparatus according to an aspect of the present invention, the received signal quality information includes at least one of an RSSI, an SNR, an SINR, or a CQI of the multiple access point apparatuses.
(4) In addition, according to (1) described above with respect to the station apparatus according to an aspect of the present invention, the received signal quality information includes capability information of the multiple access point apparatuses.
(5) In addition, according to (1) described above with respect to the station apparatus according to an aspect of the present invention, content of the received signal quality information included in the solicited frame and content of the received signal quality information included in the unsolicited frame are different from each other.
(6) In addition, according to (1) described above with respect to the station apparatus according to an aspect of the present invention, the received signal quality information includes traffic requirement information of a higher layer.
(7) An access point apparatus according to an aspect of the present invention is an access point apparatus communicating with a station apparatus, including a transmitter configured to establish an association with a first station apparatus and transmits a frame, and a receiver that receives a frame, in which an unsolicited frame including received signal quality information transmitted by the first station apparatus is received, and the received signal quality information is generated, by the first station apparatus, by measuring each frame transmitted by multiple access point apparatuses including the connected access point apparatus as a measured object.
(8) A communication method according to an aspect of the present invention is used in a communication system including a station apparatus, a first access point apparatus communicating with the station apparatus, and one or more access point apparatuses other than the first access point apparatus, the communication method including: establishing, by the station apparatus, an association with the first access point apparatus; receiving, by the station apparatus, frames transmitted by multiple access point apparatuses including the first access point apparatus; transmitting, by the station apparatus, a wireless management frame, the wireless management frame including received signal quality information generated by measuring each of the frames transmitted by the multiple access point apparatuses as a measured object; transmitting, by the station apparatus, the wireless management frame as a solicited frame in a case that the received signal quality information is requested from the first access point apparatus; and performing, by the station apparatus, at least one of a first method or a second method in a case that the received signal quality information is not requested from the first access point apparatus, the first method including issuing, from an MLME to an SME, a primitive including the received signal quality information, and the second method including transmitting the wireless management frame as an unsolicited frame.

### Advantageous Effects of Invention

According to the present invention, in a Multi-AP wireless communication system, a wireless LAN station apparatus can report channel characteristics, a received signal quality, and the like with respect to a neighbor wireless LAN access point apparatus to the wireless LAN access point apparatus without getting an indication from the wireless LAN access point apparatus, and the wireless LAN access point apparatus can change a method for a Multi-AP cooperative operation with a low delay according to the report.

### Brief Description of Drawings

FIG. 1 is a diagram illustrating an example of a frame structure according to an aspect of the present invention.
FIG. 2 is a diagram illustrating an example of a frame structure according to an aspect of the present invention.
FIG. 3 is a diagram illustrating an example of communication according to an aspect of the present invention.
FIG. 4 is a schematic diagram illustrating examples of wireless medium splitting according to an aspect of the present invention.
FIG. 5 is a diagram illustrating a configuration example of a communication system according to an aspect of the present invention.
FIG. 6 is a block diagram illustrating a configuration example of a wireless communication apparatus according to an aspect of the present invention.
FIG. 7 is a block diagram illustrating a configuration example of a wireless communication apparatus according to an aspect of the present invention.
FIG. 8 is an architecture diagram of a wireless communication apparatus according to an aspect of the present invention.
FIG. 9 is a diagram illustrating an example of a Primitive sequence according to an aspect of the present invention.
FIG. 10 is a diagram illustrating an example of a frame structure according to an aspect of the present invention.
FIG. 11 is a diagram illustrating a configuration example of a communication system according to an aspect of the present invention.
FIG. 12 is a schematic diagram of communication according to an aspect of the present invention.
FIG. 13 is a diagram illustrating an example of a Primitive sequence according to an aspect of the present invention.
FIG. 14 is a diagram illustrating an example of a Primitive sequence according to an aspect of the present invention.
FIG. 15 is a diagram illustrating an example of a frame format according to an aspect of the present invention.
FIG. 16 is a block diagram illustrating a configuration example of a wireless communication apparatus according to an aspect of the present invention.
FIG. 17 is a diagram illustrating an example of a frame format according to an aspect of the present invention.

### Description of Embodiments

A communication system according to the present embodiment includes a radio base station apparatus (an Access point apparatus or a base station apparatus that) and multiple radio terminal apparatuses (Station apparatuses or terminal apparatuses). In addition, a network including the base station apparatus and terminal apparatuses is called a Basic Service Set (BSS or a control range). In addition, the station apparatuses according to the present embodiment can have functions of the access point apparatus. Similarly, the access point apparatus according to the present embodiment can have functions of the station apparatuses. Therefore, in a case that a communication apparatus is simply mentioned below, the communication apparatus can indicate both a station apparatus and an access point apparatus.

The base station apparatus and the terminal apparatuses in the BSS are assumed to perform communication based on Carrier Sense Multiple Access with Collision Avoidance (CSMA/CA). Although the present embodiment is intended for an infrastructure mode in which a base station apparatus performs communication with multiple terminal apparatuses, the method of the present embodiment can also be performed in an ad hoc mode in which terminal apparatuses perform communication directly with each other. In the ad hoc mode, a terminal apparatus substitutes for a base station apparatus to form a BSS. The BSS in the ad hoc mode may also be referred to as an Independent Basic Service Set (IBSS). In the following description, a terminal apparatus that forms an IBSS in the ad hoc mode can also be regarded as a base station apparatus. The method of the present embodiment can also be implemented in Wi-Fi Direct (trade name) in which terminal apparatuses directly communicate with each other. In Wi-Fi Direct, a terminal apparatus substitutes for a base station apparatus to form a group. In the following description, a terminal apparatus of a group owner forming a group in Wi-Fi Direct can also be regarded as a base station apparatus.

In an IEEE 802.11 system, each apparatus can transmit frames of multiple frame types in a common frame format. The frame is defined in each of the physical (PHY) layer, the Medium Access Control (MAC) layer, and the Logical Link Control (LLC) layer.

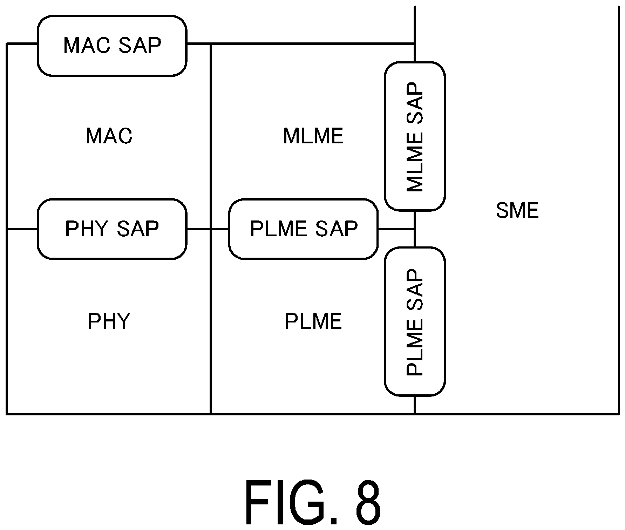

FIG. 8 illustrates an architecture diagram of a wireless communication apparatus. The MAC layer corresponds to a higher layer of the PHY layer. The PHY layer includes a management entity called a Physical Layer Management Entity (PLME), and a management function of the PHY layer is activated via the PLME. Similarly, the MAC layer includes a management entity called Medium Access Control Management Entity (MLME), and a management function of the MAC layer is activated via the MLME.

A Station Management Entity (SME) is a layer-independent entity and has a role of collecting a state specific to a layer such as the PHY or the MAC or setting a parameter value specific to a layer such as the PHY or the MAC. There is an interface called a MLME Service Access Point (SAP) between the SME and the MLME, and the MAC layer and the SME interact with each other by exchanging Primitives via the MLME SAP. Similarly, there is an interface called a PLME SAP between the SME and the PLME, and the PHY layer and the SME interact with each other by exchanging Primitives via the PLME SAP. Primitives include operations of SET and GET.

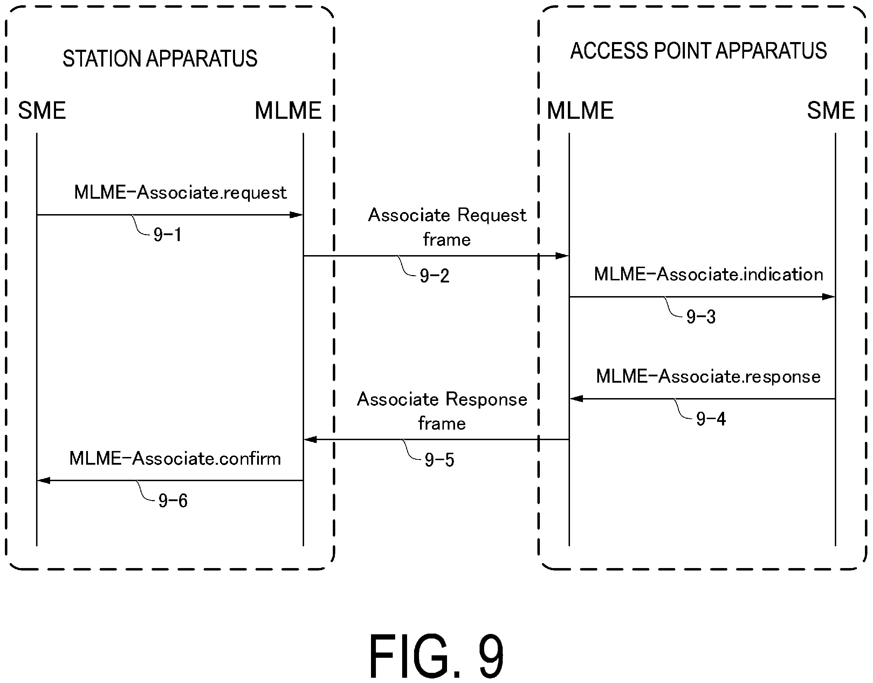

MLME-Associate Primitive will be described as a specific example of MLME SAP primitives with reference to FIG. 9. This primitive is used when a station apparatus is connected to (establishes Association with) an access point apparatus. An MLME-Associate.request 9-1 is issued from the SME to the MLME of the station apparatus, and the station apparatus transmits an Associate Request frame from the PHY layer to a wireless medium based on the MLME-Associate.request 9-1. When the Associate Request frame 9-2 is received by the access point apparatus, an MI,ME-Associate.indication 9-3 is issued from the MLME to the SME of the access point apparatus, and an MLME-Associate.response 9-4 is issued from the SME to the MLME. Based on the MI,ME-Associate.response 9-4, the access point apparatus transmits an Associate Response frame 9-5 from the PHY layer to the wireless media. When the station apparatus receives the Associate Response frame 9-5, an MLME-Associate.confirm 9-6 is issued from the MLME to the SME of the station apparatus, and a series of processes related to Associate ends. In a case that the Associate is successful, a communicable state is established between the station apparatus and the access point apparatus.

For MLME SAP Primitives, various Primitives are prepared according to purposes for the interaction between the SME and the MAC layer, besides the MLME-Associate primitive. Similarly, for PLME SAP Primitives, various Primitives are prepared according to purposes for the interaction between the SME and the PHY layer. The SME has an interface for exchange not only between the PHY layer and the MAC layer but also between the SME and the higher layer above the MAC layer. Although examples of the higher layer include a network layer, a transport layer, a session layer, a presentation layer, an application layer, and the like, the higher layer is not limited thereto and may be any layer located above the MAC layer.

A frame of the PHY layer may be referred to as a Physical Protocol Data Unit (PHY Protocol Data Unit (PPDU), physical layer frame, radio frame, or frame). The PPDU includes a physical layer header (PHY header) including header information and the like for performing signal processing in the physical layer, a Physical Service Data Unit (PHY Service Data Unit (PSDU), or MAC layer frame) that is a data unit processed in the physical layer, and the like. The PSDU can include an Aggregated MAC Protocol Data Unit (MPDU) (A-MPDU) in which multiple MPDUs serving as retransmission units in a radio section are aggregated.

A PHY header includes a reference signal such as a Short Training Field (STF) used for detection, synchronization, and the like of signals, a Long Training Field (LTF) used for obtaining channel information for demodulating data, and the like and a control signal such as a Signal (SIG) including control information for demodulating data. In addition, STFs are classified into a Legacy-STF (L-STF), a High Throughput-STF (HT-STF), a Very High Throughput-STF (VHT-STF), a High Efficiency-STF (HE-STF), an Extremely High Throughput-STF (EHT-STF), and the like in accordance with corresponding standards, and LTFs and SIGs are also similarly classified into an L-LTF, an HT-LTF, a VHT-LTF, an HE-LTF, an L-SIG, an HT-SIG, a VHT-SIG, an HE-SIG, and an EHT-SIG. The VHT-SIG is further classified into VHT-SIG-A1, VHT-SIG-A2, and VHT-SIG-B. Similarly, the HE-SIG is classified into HE-SIG-A1 to 4 and HE-SIG-B. In addition, on the assumption of technology update in the same standard, a Universal SIGNAL (U-SIG) field including additional control information can be included.

Furthermore, the PHY header can include information for identifying a BSS of a transmission source of the corresponding frame (hereinafter, also referred to as BSS identification information). The information for identifying a BSS can be, for example, a Service Set Identifier (SSID) of the BSS or a MAC address of a base station apparatus of the BSS. In addition, the information for identifying a BSS can be a value unique to the BSS (e.g., a BSS color, and the like) other than an SSID or a MAC address.

A PPDU is modulated in accordance with the corresponding standard. In the IEEE 802.11n standard, for example, a PPDU is modulated into an Orthogonal Frequency Division Multiplexing (OFDM) signal.

An MPDU includes a MAC layer header (MAC header) including header information and the like for performing signal processing in the MAC layer, a MAC Service Data Unit (MSDU) or a frame body that is a data unit processed in the MAC layer, and a Frame Check Sequence (FCS) for checking whether there is an error in a frame. In addition, multiple MSDUs can be aggregated as an Aggregated MSDU (A-MSDU).

The frame types of frames of the MAC layer are roughly classified into three frame types, namely a Management frame (also referred to as a wireless management frame) for managing a state of connection between apparatuses, and the like, a control frame (also referred to as a wireless control frame) for managing a state of communication between apparatuses, and a data frame including actual transmission data, and each of the frame types is further classified into multiple subframe types. The control frame includes a reception completion notification (Acknowledge or Ack) frame, a transmission request (Request to send or RTS) frame, a reception preparation completion (Clear to send or CTS) frame, and the like. The management frame includes a Beacon frame, a Probe request frame, a Probe response frame, an Authentication frame, an Association request frame, an Association response frame, and the like. The data frame includes a Data frame, a polling (CF-poll) frame, and the like. Each apparatus can obtain the frame type and the subframe type of a received frame by reading the content of the frame control field included in the MAC header.

Further, an Ack may include a Block Ack. A Block Ack can give a reception completion notification with respect to multiple MPDUs.

The beacon frame includes a field in which an interval at which a beacon is transmitted (Beacon interval) and an SSID are described. The base station apparatus can periodically broadcast a beacon frame within a BSS, and each terminal apparatus can recognize the base station apparatus in the surroundings of the terminal apparatus by receiving the beacon frame. The action of the terminal apparatus recognizing the base station apparatus based on the beacon frame broadcast from the base station apparatus may be referred to as passive scanning. On the other hand, the action of the terminal apparatus searching for the base station apparatus by broadcasting a probe request frame in the BSS may be referred to as active scanning. The base station apparatus can transmit a probe response frame in response to the probe request frame, and details described in the probe response frame are equivalent to those in the beacon frame.

A terminal apparatus recognizes a base station apparatus and performs association processing with respect to the base station apparatus. The association processing is classified into an Authentication procedure and an Association procedure. The terminal apparatus transmits an authentication frame (authentication request) to a base station apparatus that the terminal apparatus desires to associate with. Once the base station apparatus receives the authentication frame, then the base station apparatus transmits, to the terminal apparatus, an authentication frame (authentication response) including a status code indicating whether authentication can be made for the terminal apparatus. The terminal apparatus can determine whether the terminal apparatus has been authenticated by the base station apparatus by reading the status code described in the authentication frame. Further, the base station apparatus and the terminal apparatus can exchange the authentication frame multiple times.

After the authentication procedure, the terminal apparatus transmits an association request frame to the base station apparatus in order to perform the association procedure. Once the base station apparatus receives the association request frame, the base station apparatus determines whether to allow association with the terminal apparatus and transmits an association response frame to notify the terminal apparatus of the intent. An Association identifier (AID) for identifying the terminal apparatus is described in the association response frame, in addition to the status code indicating whether to perform the association processing. The base station apparatus can manage multiple terminal apparatuses by configuring different AIDs for the terminal apparatuses for which the base station apparatus has allowed association.

After the association processing is performed, the base station apparatus and the terminal apparatus perform actual data transmission. In the IEEE 802.11 system, a Distributed Coordination Function (DCF), a Point Coordination Function (PCF), and mechanisms in which the aforementioned mechanisms are enhanced (an Enhanced Distributed Channel Access (EDCA) or a hybrid control mechanism (Hybrid Coordination Function (HCF)), and the like) are defined. A case that the base station apparatus transmits signals to the terminal apparatus using the DCF will be described below as an example.

In the DCF, the base station apparatus and the terminal apparatus perform Carrier Sensing (CS) for checking usage of a radio channel in the surroundings of the apparatuses prior to communication. For example, in a case that the base station apparatus serving as a transmitting station receives a signal of a higher level than a predefined Clear Channel Assessment level (CCA level) on a radio channel, transmission of frames on the radio channel is postponed. Hereinafter, a state in which a signal of a level that is equal to or higher than the CCA level is detected on the radio channel will be referred to as a busy (Busy) state, and a state in which a signal of a level that is equal to or higher than the CCA level is not detected will be referred to as an idle (Idle) state. In this manner, CS performed based on power of a signal actually received by each apparatus (reception power level) is called physical carrier sensing (physical CS). Further, the CCA level is also called a carrier sensing level (CS level) or a CCA Threshold (CCAT). Further, in a case that a signal of a level that is equal to or higher than the CCA level has been detected, the base station apparatus and the terminal apparatus start to perform an operation of demodulating at least a signal of the PHY layer.

The base station apparatus performs carrier sensing in an Inter Frame Space (IFS) in accordance with the type of frame to be transmitted and determines whether the radio channel is in a busy state or idle state. A period in which the base station apparatus performs carrier sensing varies depending on the frame type and the subframe type of a frame to be transmitted by the base station apparatus. In the IEEE 802.11 system, multiple IFSs with different periods are defined, and there are a short frame interval (Short IFS or SIFS) used for a transmission frame with the highest priority given, a polling frame interval (PCF IFS or PIFS) used for a transmission frame with a relatively high priority, a distribution control frame interval (DCF IFS or DIFS) used for a transmission frame with the lowest priority, and the like. In a case that the base station apparatus transmits a data frame with the DCF, the base station apparatus uses the DIFS.

The base station apparatus waits by a DIFS and then further waits for a random backoff time to prevent frame collision. In the IEEE 802.11 system, a random backoff time is configured in a Contention Window (CW). CSMA/CA works with the assumption that a transmission frame transmitted by a certain transmitting station is received by a receiving station in a state in which there is no interference from other transmitting stations. Therefore, in a case that transmitting stations transmit frames at the same timing, the frames collide against each other, and the receiving station cannot receive them properly. Thus, each transmitting station waits for a randomly configured time before initiating transmission, and thus collision of frames can be avoided. If the base station apparatus determines, through carrier sensing, that a radio channel is in the idle state, the base station apparatus starts countdown of a backoff counter, acquires a transmission right for the first time after the backoff counter becomes zero, and can transmit a frame to the terminal apparatus. Further, in a case that the base station apparatus determines through carrier sensing that the radio channel is in the busy state during the countdown of the backoff counter, the base station apparatus stops the countdown of the backoff counter. Thereafter, in a case that the radio channel becomes in the idle state, then the base station apparatus restarts the countdown of the remaining backoff counter following wait of the same period (DIFS) as the previous IFS.

The terminal apparatus serving as a receiving station receives the frame, reads the PHY header of the frame, and demodulates the received frame. Then, the terminal apparatus reads the MAC header of the demodulated signal and thus can recognize whether the frame is addressed to the terminal apparatus itself. Further, the terminal apparatus can also determine the destination of the frame based on information described in the PHY header (for example, a Group Identifier (Group ID or GID) described in VHT-SIG-A).

In a case that the terminal apparatus determines that the received frame is addressed to the terminal apparatus itself and demodulates the frame without any error, the terminal apparatus needs to transmit an Ack frame indicating the proper reception of the frame to the base station apparatus serving as a transmitting station. The Ack frame is one of frames with the highest priority transmitted only after a wait for the SIFS period (with no random backoff time). The base station apparatus ends the series of communication with the reception of the Ack frame transmitted from the terminal apparatus. Further, in a case that the terminal apparatus is not able to receive the frame properly, the terminal apparatus does not transmit Ack. Thus, in a case that no Ack frame has been received from the receiving station for a certain period (a length of SIFS + Ack frame) after the transmission of the frame, the base station apparatus considers the communication to have been failed and ends the communication. In this manner, an end of a single communication operation (also called a burst) in the IEEE 802.11 system is to be determined based on whether an Ack frame has been received, except for special cases such as a case of transmission of a broadcast signal such as a beacon frame, a case that fragmentation for splitting transmission data is used, or the like.

In a case that the terminal apparatus determines that the received frame is not addressed to the terminal apparatus itself, the terminal apparatus configures a Network Allocation Vector (NAV) based on the length of the frame (Length) described in the PHY header or the like. The terminal apparatus does not attempt communication during the period configured in the NAV. In other words, because the terminal apparatus performs the same operation as in the case that the terminal apparatus determines the radio channel is in the busy state through physical CS for the period configured in the NAV, the communication control based on the NAV is also called virtual carrier sensing (virtual CS). The NAV is also configured by a transmission request (Request to send or RTS) frame or a reception preparation completion (Clear to send or CTS) frame, which are introduced to solve a hidden terminal problem in addition to the case that the NAV is configured based on the information described in the PHY header.

Unlike the DCF in which each apparatus performs carrier sensing and autonomously acquires the transmission right, with respect to the PCF, a control station called a Point Coordinator (PC) controls the transmission right of each apparatus within a BSS. In general, a base station apparatus serves as a PC and acquires the transmission right of a terminal apparatus within a BSS.

A communication period using the PCF includes a Contention Free Period (CFP) and a Contention Period (CP). Communication is performed based on the aforementioned DCF during a CP, and a PC controls the transmission right during a CFP. The base station apparatus serving as a PC broadcasts a beacon frame with description of a CFP (CFP Max duration) and the like in a BSS prior to communication with a PCF. Further, the PIFS is used for transmission of a beacon frame broadcast at the time of initiating transmission by the PCF, and the beacon frame is transmitted without waiting for a CW. The terminal apparatus that has received the beacon frame configures a CFP described in the beacon frame in a NAV. Hereinafter, the terminal apparatus can acquire the transmission right only in a case that a signal (e.g., a data frame including CF-poll) for signaling the acquisition of the transmission right transmitted by the PC is received, until the NAV elapses or a signal (e.g., a data frame including CF-end) broadcasting the end of the CFP in a BSS is received. Further, because no packet collision occurs in the same BSS during a CFP, each terminal apparatus does not take a random backoff time used for the DCF.

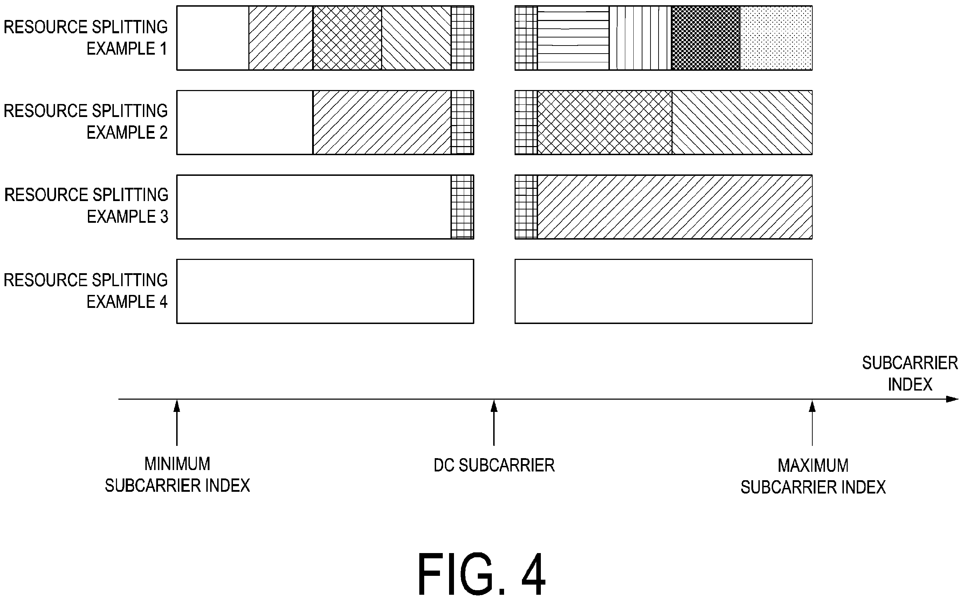

A wireless medium can be split into multiple Resource Units (RUs). FIG. 4 is a schematic diagram illustrating examples of split states of a wireless medium. In a resource splitting example 1, for example, a wireless communication apparatus can split a frequency resource (subcarrier) that is a wireless medium into nine RUs. Similarly, in a resource splitting example 2, the wireless communication apparatus can split a subcarrier that is a wireless medium into five RUs. It is a matter of course that the resource splitting examples illustrated in FIG. 4 are merely examples, and for example, the multiple RUs can include a different number of subcarriers. In addition, each wireless medium that is split into RUs can include not only frequency resources but also spatial resources. The wireless communication apparatus (e.g., an AP) can transmit frames to multiple terminal apparatuses (e.g., multiple STAs) at the same time by mapping frames addressed to different terminal apparatuses to the respective RUs. An AP can include information indicating a split state of the wireless medium (Resource allocation information) as common control information in the PHY header of the frame transmitted by the AP itself. Moreover, the AP can include information indicating an RU to which a frame addressed to each STA is mapped (Resource unit assignment information) as unique control information in the PHY header of the frame transmitted by the AP itself.

In addition, multiple terminal apparatuses (e.g., multiple STAs) can transmit frames at the same time by mapping and transmitting the frames to the respective RUs allocated to the apparatuses. The multiple STAs can perform frame transmission after waiting for a prescribed period after receiving a frame including trigger information (trigger frame or TF) transmitted from the AP. Each STA can obtain the RU allocated to the STA itself based on the information described in the TF. In addition, each STA can acquire the RU through random access with reference to the TF.

The AP can allocate multiple RUs to one STA at the same time. The multiple RUs can include continuous subcarriers or can include discontinuous subcarriers. The AP can transmit one frame using multiple RUs allocated to one STA or can transmit multiple frames after allocating them to different RUs. At least one of the multiple frames can be a frame including common control information for multiple terminal apparatuses that transmit Resource allocation information.

One STA can be allocated multiple RUs by the AP. The STA can transmit one frame using the multiple allocated RUs. Also, the STA can use the multiple allocated RUs to transmit multiple frames allocated to different RUs. The multiple frames each can be a frame of a different frame type.

The AP can allocate multiple AIDs to one STA. The AP can allocate an RU to each of the multiple AIDs allocated to the one STA. The AP can transmit different frames using the respective RUs allocated to the multiple AIDs allocated to the one STA. The different frames each can be a frame of a different frame type.

One STA can be allocated multiple AIDs by the AP. The one STA can be allocated an RU with respect to each of the multiple allocated AIDs. The one STA recognizes all of the RUs allocated to the respective multiple AIDs allocated to the STA itself as RUs allocated to the STA and can transmit one frame using the multiple allocated RUs. In addition, the one STA can transmit multiple frames using the multiple allocated RUs. At this time, the multiple frames can be transmitted with information indicating the AIDs associated with the respective allocated RUs included therein.

Hereinafter, the base station apparatus and the terminal apparatuses may be collectively referred to as wireless communication apparatuses or communication apparatuses. In addition, information exchanged in a case that a certain wireless communication apparatus performs communication with another wireless communication apparatus may also be referred to as data. In other words, wireless communication apparatuses include a base station apparatus and a terminal apparatus.

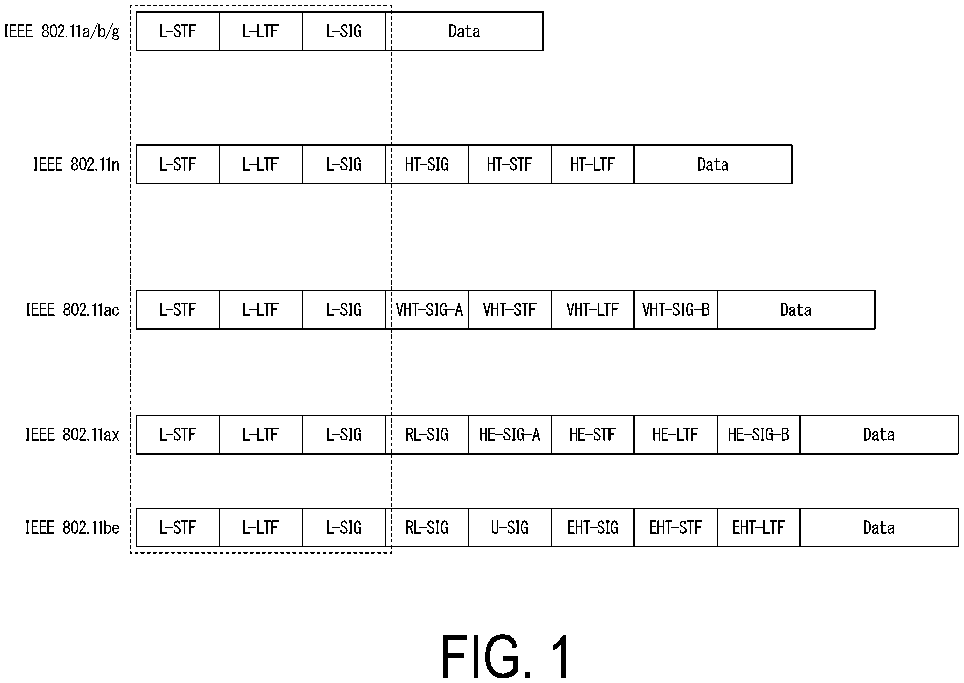

A wireless communication apparatus includes any one of or both the function of transmitting a PPDU and a function of receiving a PPDU. FIG. 1 is a diagram illustrating examples of formats of a PPDU transmitted by a wireless communication apparatus. A PPDU that is compliant with the IEEE 802.11a/b/g standard includes L-STF, L-LTF, L-SIG, and a data frame (a MAC Frame, a MAC frame, a payload, a data part, data, information bits, and the like). A PPDU that is compliant with the IEEE 802.11n standard includes L-STF, L-LTF, L-SIG, HT-SIG, HT-STF, HT-LTF, and a data frame. A PPDU that is compliant with the IEEE 802.1 1ac standard includes some or all of L-STF, L-LTF, L-SIG, VHT-SIG-A, VHT-STF, VHT-LTF, VHT-SIG-B, and a MAC frame. A PPDU in the IEEE 802.11ax standard includes some or all of L-STF, L-LTF, L-SIG, RL-SIG in which L-SIG is temporally repeated, HE-SIG-A, HE-STF, HE-LTF, HE-SIG-B, and a data frame. A PPDU studied in the IEEE 802.11be standard includes some or all of L-STF, L-LTF, L-SIG, RL-SIG, U-SIG, EHT-SIG, EHT-STF, HET-LTF, and a data frame.

L-STF, L-LTF, and L-SIG surrounded by the dotted line in FIG. 1 are formats commonly used in the IEEE 802.11 standard (hereinafter, L-STF, L-LTF, and L-SIG may also be collectively referred to as an "L-header"). For example, a wireless communication apparatus that is compliant with the IEEE 802.1 1a/b/g standard can appropriately receive an L-header in a PPDU that is compliant with the IEEE 802.11n/ac standard. A wireless communication apparatus that is compliant with the IEEE 802.1 1a/b/g standard can receive the PPDU that is compliant with the IEEE 802.1 1n/ac standard while considering it to be a PPDU that is compliant with the IEEE 802.1 1a/b/g standard.

However, because the wireless communication apparatus that is compliant with the IEEE 802.11a/b/g standard cannot demodulate the PPDU that is compliant with the IEEE 802.1 1n/ac standard following the L-header, it is not possible to demodulate information about a Transmitter Address (TA), a Receiver Address (RA), and a Duration/ID field used for configuring a NAV.

As a method for the wireless communication apparatus that is compliant with the IEEE 802.1 1a/b/g standard to appropriately configure a NAV (or to perform a receiving operation for a prescribed period), IEEE 802.11 defines a method for inserting duration information to the L-SIG. Information about a transmission speed in the L-SIG (a RATE field, an L-RATE field, an L-RATE, an L_DATARATE, and an L_DATARATE field) and information about a transmission period (a LENGTH field, an L-LENGTH field, and an L-LENGTH) are used by the wireless communication apparatus that is compliant with the IEEE 802.11a/b/g standard to appropriately configure a NAV.

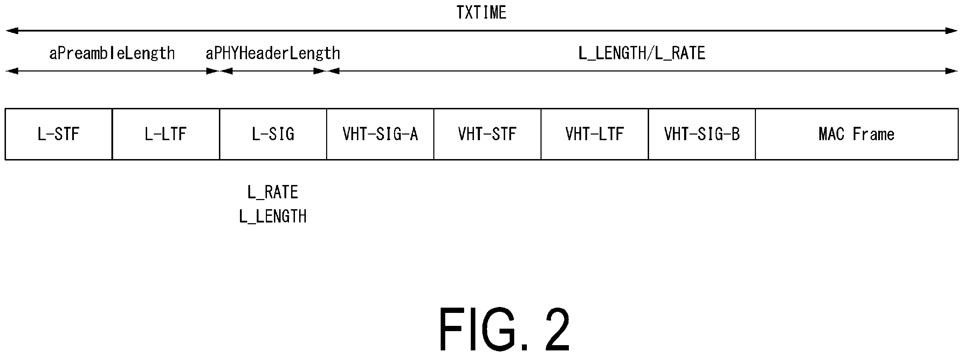

FIG. 2 is a diagram illustrating an example of a method for Duration information inserted into an L-SIG. Although a PPDU format that is compliant with the IEEE 802.11ac standard is illustrated as an example in FIG. 2, a PPDU format is not limited thereto. A PPDU format that is compliant with the IEEE 802.11n standard, a PPDU format that is compliant with the IEEE 802.11ax standard, and a PPDU format studied in the IEEE 802.11be may be employed. TXTIME includes information about a length of a PPDU, aPreambleLength includes information about a length of a preamble (L-STF + L-LTF), and aPHYHeaderLength includes information about a length of a PHY header (L-SIG). L_LENGTH is calculated based on Signal Extension that is a virtual period configured for compatibility with the IEEE 802.11 standard, Nₒₚₛ related to L-RATE, aSymbolLength that is information about a period of one symbol (a symbol, an OFDM symbol, or the like), aPHYServiceLength indicating the number of bits included in the Service field, and aPHYConvolutionalTailLength indicating the number of tail bits of a convolution code. The wireless communication apparatus can calculate L _LENGTH and include L _LENGTH in L-SIG. In addition, the wireless communication apparatus can calculate L-SIG Duration. L-SIG Duration indicates information about a PPDU including L _LENGTH and information about a period that is the sum of periods of Ack and SIFS expected to be transmitted by the wireless communication apparatus serving as a destination in response to the PPDU.

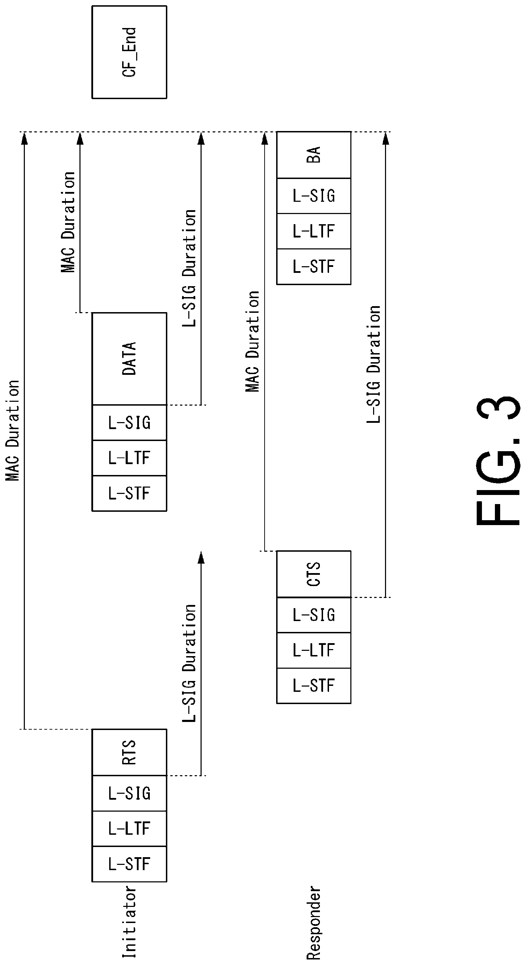

FIG. 3 is a diagram illustrating an example of L-SIG Duration in L-SIG TXOP Protection. DATA (a frame, a payload, data, and the like) include some of or both the MAC frame and the PHY header. In addition, BA indicates Block Ack or Ack. A PPDU includes L-STF, L-LTF, and L-SIG and can further include any one or more of DATA, BA, RTS, or CTS. Although L-SIG TXOP Protection using RTS/CTS is illustrated in the example illustrated in FIG. 3, CTS-to-Self may be used. Here, MAC Duration is a period indicated by a value of Duration/ID field. In addition, Initiator can transmit a CF_End frame for providing a notification regarding an end of the L-SIG TXOP Protection period.

Next, a method for identifying a BSS from a frame received by the wireless communication apparatus will be described. In order for a wireless communication apparatus to identify a BSS from a received frame, the wireless communication apparatus that transmits a PPDU preferably inserts information for identifying the BSS (BSS Color, BSS identification information, or a value unique to the BSS) into the PPDU. The information indicating a BSS color can be included in HE-SIG-A.

The wireless communication apparatus can transmit L-SIG multiple times (L-SIG Repetition). For example, demodulation accuracy of L-SIG is improved by the wireless communication apparatus on the reception side receiving L-SIG transmitted multiple times by using Maximum Ratio Combining (MRC). Moreover, in a case that reception of L-SIG is properly completed by using MRC, the wireless communication apparatus can interpret the PPDU including the L-SIG as a PPDU that is compliant with the IEEE 802.11ax standard.

Even during the operation of receiving the PPDU, the wireless communication apparatus can perform a reception operation of a part of a PPDU other than the corresponding PPDU (e.g., the preamble, L-STF, L-LTF, and the PHY header prescribed by IEEE 802.11) (also referred to as a double-reception operation). In a case that a part of a PPDU other than the corresponding PPDU is detected during the operation of receiving the PPDU, the wireless communication apparatus can update a destination address, a transmission source address, and a part or an entirety of information about the PPDU or a DATA period.

Ack and BA can also be referred to as a response (response frame). In addition, a probe response, an authentication response, and an association response can also be referred to as a response.

### 1. First Embodiment

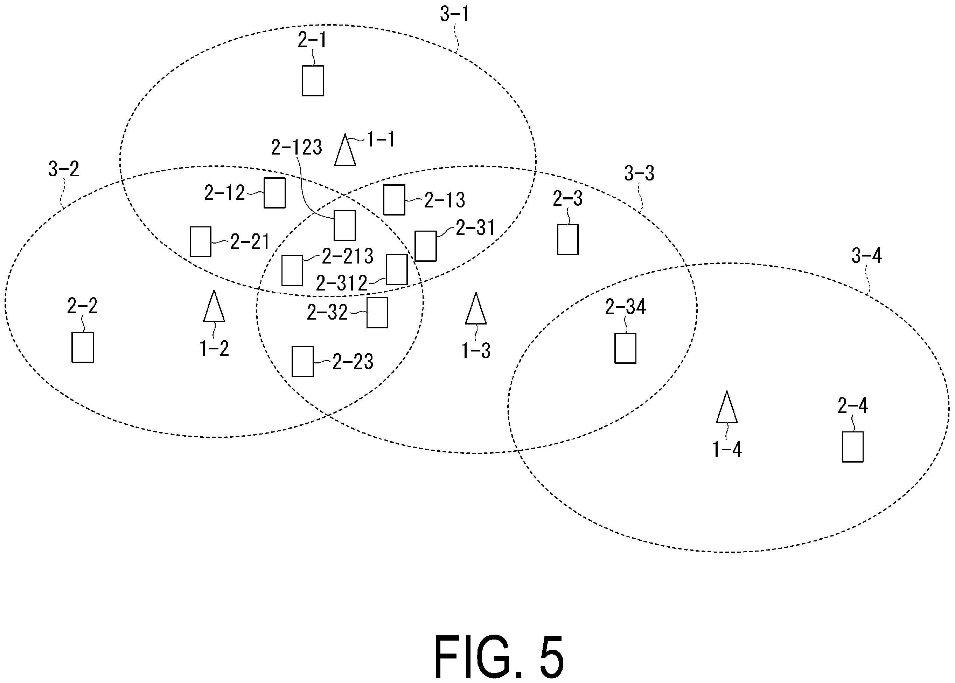

A Multi-AP wireless communication system includes wireless communication systems provided by multiple access point apparatuses. FIG. 5 is a diagram illustrating an example of a Multi-AP wireless communication system according to the present embodiment, which is an example including four wireless communication systems 3-1, 3-2, 3-3, and 3-4. In the Multi-AP wireless communication system, multiple access point apparatuses can cooperatively operate to transmit and/or receive frames to and from a station apparatus, in addition to conventional transmission and/or reception of frames between one access point apparatus and one or more station apparatuses. Basically, communication areas (also referred to as a "coverage" which indicates 3-1, 3-2, 3-3, and 3-4 in this example) provided by each of the wireless communication systems overlap each other. Although this example is an example in which the Multi-AP wireless communication system includes four wireless communication systems, this is merely an example, and the Multi-AP wireless communication system may include a number of multiple wireless communication systems other than four.

The wireless communication system 3-1 includes an access point apparatus 1-1 and station apparatuses 2-1, 2-12, 2-13, and 2-123. In addition, the station apparatuses 2-1, 2-12, 2-13, and 2-123 are also collectively referred to as a station apparatus 2A (terminal apparatus 2A) as apparatuses connected to (having established Association with) the access point apparatus 1-1. The access point apparatus 1-1 and the station apparatus 2A are wirelessly connected to each other and are in a state in which they can transmit and/or receive frames to and from each other. Furthermore, although the station apparatus 2-12 is connected to the access point apparatus 1-1, the access point apparatus 1-1 and the access point apparatus 1-2 may cooperatively operate to transmit and/or receive frames to and from the station apparatus 2 - 12. Although the station apparatus 2-13 is connected to the access point apparatus 1-1, the access point apparatus 1-1 and an access point apparatus 1-3 may cooperatively operate to transmit and/or receive frames to and from the station apparatus 2-13. Although the station apparatus 2-123 is connected to the access point apparatus 1-1, the access point apparatus 1-1, an access point apparatus 1-2, and the access point apparatus 1-3 may cooperatively operate to transmit and/or receive frames to and from the station apparatus 2-123. The station apparatus 2-1 performs frame transmission and/or reception only with the access point apparatus 1-1 with which an association is established.

A wireless communication system 3-2 includes the access point apparatus 1-2 and station apparatuses 2-2, 2-21, 2-23, and 2-213. In addition, the station apparatuses 2-2, 2-21, 2-23, and 2-213 are also collectively referred to as a station apparatus 2B (terminal apparatus 2B) as apparatuses connected to (having established Association with) the access point apparatus 1-2. The access point apparatus 1-2 and the station apparatus 2B are wirelessly connected to each other and are in a state in which they can transmit and/or receive frames to and from each other. Furthermore, although the station apparatus 2-21 is connected to the access point apparatus 1-2, the access point apparatus 1-2 and the access point apparatus 1-1 may cooperatively operate to transmit and/or receive frames to and from the station apparatus 2-21. Although the station apparatus 2-23 is connected to the access point apparatus 1-2, the access point apparatus 1-2 and the access point apparatus 1-3 may cooperatively operate to transmit and/or receive frames to and from the station apparatus 2-23. Although the station apparatus 2-213 is connected to the access point apparatus 1-2, the access point apparatus 1-2, the access point apparatus 1-1, and the access point apparatus 1-3 may cooperatively operate to transmit and/or receive frames to and from the station apparatus 2-213. The station apparatus 2-2 performs frame transmission and/or reception only with the access point apparatus 1-2 with which an association is established.

The wireless communication system 3-3 includes the access point apparatus 1-3 and station apparatuses 2-3, 2-31, 2-32, 2-34, and 2-312. In addition, the station apparatuses 2-3, 2-31, 2-32, 2-34. and 2-312 are also collectively referred to as a station apparatus 2C (terminal apparatus 2C) as apparatuses connected to (having established Association with) the access point apparatus 1-3. The access point apparatus 1-3 and the station apparatus 2C are wirelessly connected to each other and are in a state in which they can transmit and/or receive frames to and from each other. Furthermore, although the station apparatus 2-31 is connected to the access point apparatus 1-3, the access point apparatus 1-3 and the access point apparatus 1-1 may cooperatively operate to transmit and/or receive frames to and from the station apparatus 2-31. Although the station apparatus 2-32 is connected to the access point apparatus 1-3, the access point apparatus 1-3 and the access point apparatus 1-2 may cooperatively operate to transmit and/or receive frames to and from the station apparatus 2-32. Although the station apparatus 2-34 is connected to the access point apparatus 1-3, the access point apparatus 1-3 and an access point apparatus 1-4 may cooperatively operate to transmit and/or receive frames to and from the station apparatus 2-34. Although the station apparatus 2-312 is connected to the access point apparatus 1-3, the access point apparatus 1-3, the access point apparatus 1-1, and the access point apparatus 1-2 may cooperatively operate to transmit and/or receive frames to and from the station apparatus 2-312. The station apparatus 2-3 performs frame transmission and/or reception only with the access point apparatus 1-3 with which an association is established.

The wireless communication system 3-4 includes the access point apparatus 1-4 and a station apparatus 2-4. In addition, the station apparatus 2-4 is collectively referred to as a station apparatus 2D (terminal apparatus 2D) as an apparatus connected to the access point apparatus 1-4. The access point apparatus 1-4 and the station apparatus 2D are wirelessly connected to each other and are in a state in which they can transmit and/or receive frames to and from each other. The station apparatus 2-4 performs frame transmission and/or reception only with the access point apparatus 1-4 with which an association is established.

Although each of the access point apparatuses 1-1, 1-2, 1-3, and 1-4 included in the Multi-AP wireless communication system constitutes a wireless communication system, and at least one access point apparatus serves as a Parent access point apparatus (Parent AP) (also referred to as a "Coordinator access point apparatus" (Coordinator AP), a Sharing access point apparatus (Sharing AP), or the like) to issue an indication to a Child access point apparatus (Child AP) (also referred to as a Coordinated access point apparatus (Coordinated AP), a Shared access point apparatus (Shared AP), or the like), which is another access point apparatus, to perform control. Multiple parent access point apparatuses may be arranged in one Multi-AP wireless communication system to provide redundancy or to share roles.

Each access point apparatus constituting the Multi-AP wireless communication system may relay a frame transmitted to a station apparatus connected to another access point apparatus or a frame received from a station apparatus. For example, a frame transmitted by the access point apparatus 1-1 may be received by the station apparatus 2-2 via the access point apparatus 1-2. In addition, a frame transmitted by the station apparatus 2-2 can be received by the access point apparatus 1-1 via the access point apparatus 1-2.

Each access point apparatus constituting the Multi-AP wireless communication system may perform an inter-access-point-apparatus cooperative operation, and one or more access point apparatuses may transmit and/or receive frames to and from one station apparatus. For example, the access point apparatus 1-1 may be involved in frame transmission and/or reception with the station apparatus 2-21 connected to the access point apparatus 1-2.

There are multiple methods for the inter-access-point-apparatus cooperative operation between the described above. As a representative method, there is a Joint Operation in which multiple access point apparatuses transmit and/or receive frames to and from one station apparatus, and examples thereof include Joint Transmission (Joint Tx), Joint OFDMA, and Joint Beam Forming (BF). For example, the access point apparatus 1-2 shares the data part of the frame addressed to the station apparatus 2-21 with the access point apparatus 1-1, and the access point apparatuses 1-2 and 1-1 transmit the frame to the station apparatus 2-21 at the same timing to obtain the gain.

As another representative method, there is also a Coordinated Operation in which multiple access point apparatuses cooperate to share a communication condition with each other to adjust a method of using a wireless medium, and finally, only one access point apparatus transmits and/or receives frames to and from one station apparatus. Examples thereof include Coordinated OFDMA, Coordinated Spatial Reuse (SR), Coordinated Beam Forming (BF), Coordinated TXOP Sharing, Coordinated Time Division Multiple Access (TDMA), etc. For example, in Coordinated OFDMA, frequency resources are allocated so that the frequency resources used by each of the access point apparatus 1-1 and the access point apparatus 1-2 do not overlap. As a result, the access point apparatus 1-1 uses a frequency resource A for the station apparatus 2-12, and the access point apparatus 1-2 uses a frequency resource B that does not overlap the frequency resource A for the station apparatus 2-21, and thereby can transmit and/or receive frames at the same time to the station apparatus 2-12 and the station apparatus 2-21 that are located at positions where their communication areas (coverages) overlap.

The method for inter-access-point-apparatus cooperative operations is not limited to the two methods described here that are joint operation and coordinated operation, and there are various other methods.

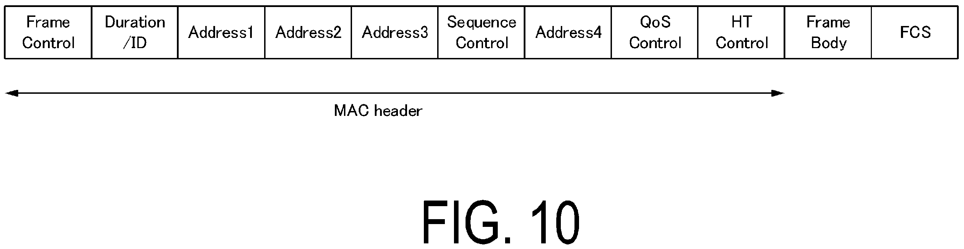

FIG. 10 illustrates an example of a MAC frame format. The MAC frame described herein refers to the data frame (a MAC Frame, a MAC frame, a payload, a data part, data, an information bit, and the like) in FIG. 1 and the MAC frame in FIG. 2. The MAC frame includes Frame Control, Duration/ID, Address 1, Address 2, Address 3, Sequence Control, Address 4, QoS Control, HT Control, Frame Body, and FCS.

Although the wireless communication system 3-1, the wireless communication system 3-2, the wireless communication system 3-3, and the wireless communication system 3-4 form different BSSs, this does not necessarily mean that Extended Service Sets (ESSs) are different. An ESS indicates a service set forming a Local Area Network (LAN). In other words, wireless communication apparatuses belonging to the same ESS can be regarded as belonging to the same network from a higher layer. The BSSs are connected via a Distribution System (DS) and form an ESS. In addition, each of the wireless communication systems 3-1, 3-2, 3-3, and 3-4 can further include multiple wireless communication apparatuses.

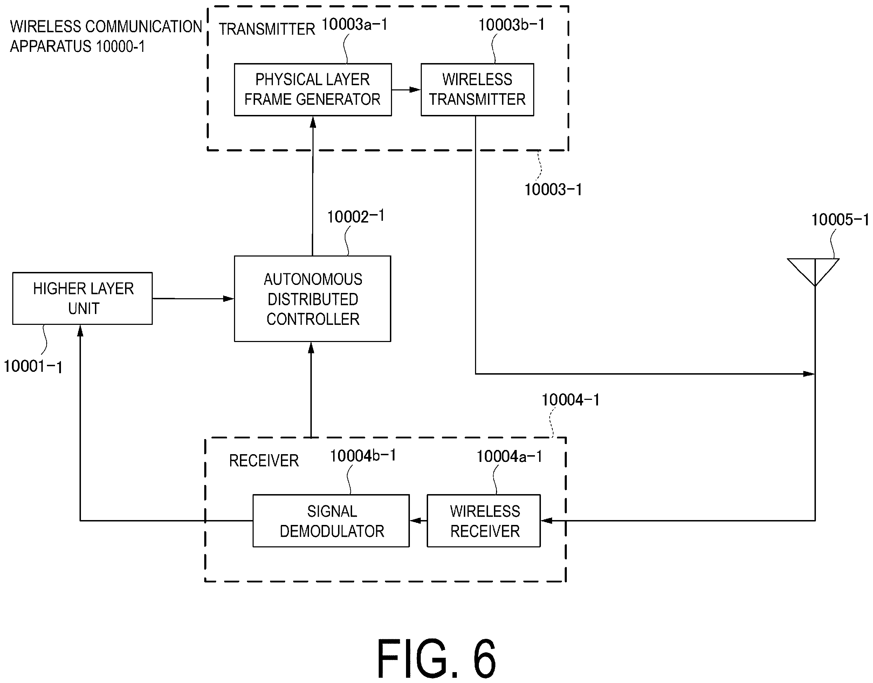

FIG. 6 is a diagram illustrating an example of an apparatus configuration of each of the wireless communication apparatuses 1-1, 1-2, 1-3, 1-4, 2A, 2B, 2C, and 2D (hereinafter, also collectively referred to as a wireless communication apparatus 10000-1). The wireless communication apparatus 10000-1 includes a higher layer unit (higher layer processing step) 10001-1, an autonomous distributed controller (autonomous distributed control step) 10002-1, a transmitter (transmission step) 10003-1, a receiver (reception step) 10004-1, and an antenna unit 10005-1.

The higher layer unit 10001-1 functions as a MAC layer, is connected to another network via a Distribution System (DS), and can notify the autonomous distributed controller 10002-1 of information about traffic. The information about traffic may be, for example, information addressed to another wireless communication apparatus, or may be control information included in a management frame or a control frame.

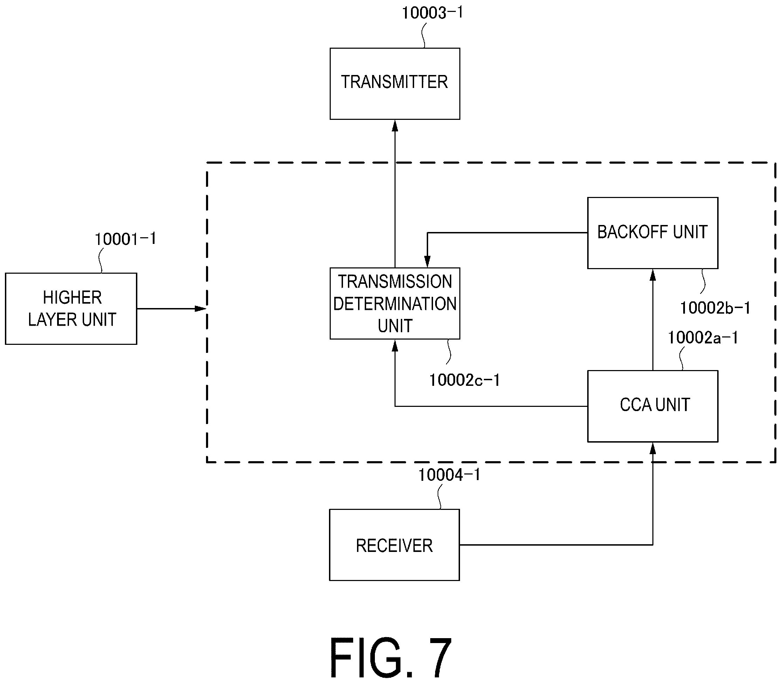

FIG. 7 is a diagram illustrating an example of an apparatus configuration of the autonomous distributed controller 10002-1. The autonomous distributed controller 10002-1 includes a CCA unit (CCA step) 10002a-1, a backoff unit (backoff step) 10002b-1, and a transmission determination unit (transmission determination step) 10002c-1.

The CCA unit 10002a-1 can perform determination of a state of a radio resource (including determination between a busy state and an idle state) using any one of or both information related to received signal power received via the radio resource and information related to the reception signal (including information after decoding) provided as a notification from the receiver 10004-1. The CCA unit 10002a-1 can notify the backoff unit 10002b-1 and the transmission determination unit 10002c-1 of the state determination information of the radio resources.

The backoff unit 10002b-1 can perform a backoff procedure using the state determination information of the radio resources. The backoff unit 10002b-1 has a function of random backoff time countdown configured in a CW. For example, the countdown of the backoff counter is performed in a case that the state determination information of the radio resources indicates idle, and the countdown of the backoff counter can be stopped in a case that the state determination information of the radio resources indicates busy. The backoff unit 10002b-1 can notify the transmission determination unit 10002c-1 of the value of the backoff counter.

The transmission determination unit 10002c-1 performs transmission determination using either of or both the state determination information of the radio resources or/and the value of the backoff counter. For example, the transmitter 10003-1 can be notified of the transmission determination information when the state determination information of the radio resources indicates idle and the value of the backoff counter is zero. In addition, the transmitter 10003-1 can be notified of the transmission determination information when the state determination information of the radio resources indicates idle.

The transmitter 10003-1 includes a physical layer frame generator (physical layer frame generation step) 10003a-1 and a wireless transmitter (wireless transmission step) 10003b-1. The physical layer frame generator 10003a-1 has a function of generating a physical layer frame (PPDU) based on transmission determination information provided as a notification from the transmission determination unit 10002c-1. The physical layer frame generator 10003a-1 performs error correction coding, modulation, precoding filter multiplication, and the like on transmission frames sent from the higher layer. The physical layer frame generator 10003a-1 notifies the wireless transmitter 10003b-1 of the generated physical layer frame.

Although the physical layer frame generator 10003a-1 performs error correction coding on the information bits input from the MAC layer, a unit in which the error correction coding (coding block length) is performed is not limited. For example, the physical layer frame generator 10003a-1 can divide the information bit sequence input from the MAC layer into information bit sequences having a prescribed length to perform error correction coding on each of the sequences, and thus can make the sequences into multiple coding blocks. Further, dummy bits can be inserted into the information bit sequence input from the MAC layer when coding blocks are configured.

The frame generated by the physical layer frame generator 10003a-1 includes control information. The control information includes information indicating to which RU the data addressed to each wireless communication apparatus is mapped (here, the RU including both frequency resources and spatial resources). In addition, the frame generated by the physical layer frame generator 10003a-1 includes a trigger frame for indicating frame transmission to the wireless communication apparatus that is a destination terminal. The trigger frame includes information indicating the RU to be used by the wireless communication apparatus having received the indication of the frame transmission to transmit the frame.

The wireless transmitter 10003b-1 converts the physical layer frame generated by the physical layer frame generator 10003a-1 into a signal in a Radio Frequency (RF) band to generate a radio frequency signal. Processing performed by the wireless transmitter 10003b-1 includes digital-to-analog conversion, filtering, frequency conversion from a baseband to an RF band, and the like.

The receiver 10004-1 includes a wireless receiver (wireless reception step) 10004a-1 and a signal demodulator (signal demodulation step) 10004b-1. The receiver 10004-1 generates information about received signal power from a signal in the RF band received by the antenna unit 10005-1. The receiver 10004-1 can notify the CCA unit 10002a-1 of the information about the received signal power and the information about the received signal.

The wireless receiver 10004a-1 has a function of converting a signal in the RF band received by the antenna unit 10005-1 into a baseband signal and generating a physical layer signal (e.g., a physical layer frame). Processing performed by the wireless receiver 10004a-1 includes processing of frequency conversion from the RF band to the baseband, filtering, and analog-to-digital conversion.

The signal demodulator 10004b-1 has a function of demodulating a physical layer signal generated by the wireless receiver 10004a-1. Processing performed by the signal demodulator 10004b-1 includes channel equalization, demapping, error correction decoding, and the like. The signal demodulator 10004b-1 can extract, from the physical layer signal, information included in the physical layer header, information included in the MAC header, and other information included in the MAC frame, for example. The signal demodulator 10004b-1 can output the extracted information to the higher layer unit 10001-1. Further, the signal demodulator 10004b-1 can extract any one or all of the information included in the physical layer header, the information included in the MAC header, and the other information included in the MAC frame.

The antenna unit 10005-1 has a function of transmitting a radio frequency signal generated by the wireless transmitter 10003b-1 into the radio space toward another wireless communication apparatus 10000-1. In addition, the antenna unit 10005-1 has a function of receiving a radio frequency signal transmitted by another wireless communication apparatus 10000-1.

The wireless communication apparatus 10000-1 can include information indicating a period in which the wireless communication apparatus 10000-1 uses the wireless medium in the PHY header or the MAC header of the frame to be transmitted, and cause a neighbor wireless communication apparatus of the wireless communication apparatus 10000-1 to configure a NAV for the period. For example, the wireless communication apparatus 10000-1 can include the information indicating the period in the Duration/ID field or the Length field of the frame to be transmitted. The NAV period configured for a neighbor wireless communication apparatus of the wireless communication apparatus 10000-1 is referred to as a TXOP period (or simply TXOP or also a transmission opportunity) acquired by the wireless communication apparatus 10000-1. In addition, the wireless communication apparatus 10000-1 that has acquired a TXOP is referred to as a TXOP holder. The type of frame to be transmitted by the wireless communication apparatus 10000-1 to acquire a TXOP is not limited to any frame type, and may be a control frame (e.g., an RTS frame or a CTS-to-self frame) or may be a data frame.

The wireless communication apparatus 10000-1 that is a TXOP holder can transmit a frame to a wireless communication apparatus other than the wireless communication apparatus 10000-1 itself during the TXOP. In a case that the wireless communication apparatus 1-1 is a TXOP holder, the wireless communication apparatus 1-1 can transmit a frame to a wireless communication apparatus 2A during the TXOP period. In addition, the wireless communication apparatus 1-1 can indicate, to the wireless communication apparatus 2A, frame transmission addressed to the wireless communication apparatus 1-1 during the TXOP period. The wireless communication apparatus 1-1 can transmit, to the wireless communication apparatus 2A, a trigger frame including information for indicating frame transmission addressed to the wireless communication apparatus 1-1 during the TXOP period.

The wireless communication apparatus 1-1 may obtain a TXOP for the entire communication band (e.g., operation bandwidth) in which frame transmission is likely to be performed, or may obtain a TXOP for a specific communication band (band) such as a communication band in which frames are actually transmitted (e.g., transmission bandwidth).

A wireless communication apparatus to which the wireless communication apparatus 1-1 indicates frame transmission in the acquired TXOP period is not necessarily limited to a wireless communication apparatus connected to the wireless communication apparatus 1-1. For example, the wireless communication apparatus can indicate frame transmission to a wireless communication apparatus that is not connected to the wireless communication apparatus itself in order to cause a neighbor wireless communication apparatus of the wireless communication apparatus itself to transmit a management frame such as a Reassociation frame or a control frame such as an RTS/CTS frame.

Furthermore, a TXOP in EDCA that is a data transmission method different from the DCF will also be described. The IEEE 802.11e standard relates to the EDCA, and defines a TXOP from the perspective of Quality of Service (QoS) assurance for various services such as video transmission or VoIP. The services are roughly classified into four access categories, namely voice (VO), video (VI), best effort (BE), and background (BK). In general, the services include VO, VI, BE, and BK in order of higher priorities. Each of the access categories has parameters including CWmin as a minimum value of a CW, CWmax as a maximum value, Arbitration IFS (AIFS) as a type of IFS, and a TXOP limit as an upper limit value of the TXOP, which are configured to give a difference in the priority. For example, it is possible to perform data transmission prioritized over the other access categories by configuring CWmin, CWmax, and AIFS of VO with the highest priority for the purpose of voice transmission equal to a relatively small value as compared with the other access categories. For example, for VI of which the amount of transmission data for video transmission is relatively large, the TXOP limit can be configured to be higher, so the TXOP can be longer than the other access categories. In this manner, four parameter values of each of the access categories are adjusted for the purpose of QoS assurance in accordance with various services.

In the present embodiment, the signal demodulator 10004b-1 of the station apparatus can perform a decoding processing for the received signal in the physical layer, and perform error detection. Here, the decoding processing includes decoding processing for error correction codes applied to the received signal. Here, the error detection includes error detection using an error detection code (e.g., a Cyclic Redundancy Check (CRC) code) that has been given to the received signal in advance, and error detection using an error correction code (e.g., Low-Density Parity-check Code (LDPC)) having an error detection function from the first. The decoding processing in the physical layer can be applied for each coding block.

The higher layer unit 10001-1 inputs the decoding result of the physical layer from the signal demodulator 10004b-1 to restore the signal of the MAC layer. Then, error detection is performed in the MAC layer, and it is determined that whether the signal of the MAC layer transmitted by the station apparatus as a transmission source of the reception frame has been properly restored.

The wireless communication apparatus may be a Multi-Link Device (MLD) capable of multi-link communication. An access point apparatus corresponding to an MLD is referred to as an MLD access point apparatus, and a station apparatus corresponding to an MLD is referred to as an MLD station apparatus. In addition, the MLD access point apparatus and the MLD station apparatus are also collectively referred to as an MLD wireless communication apparatus.

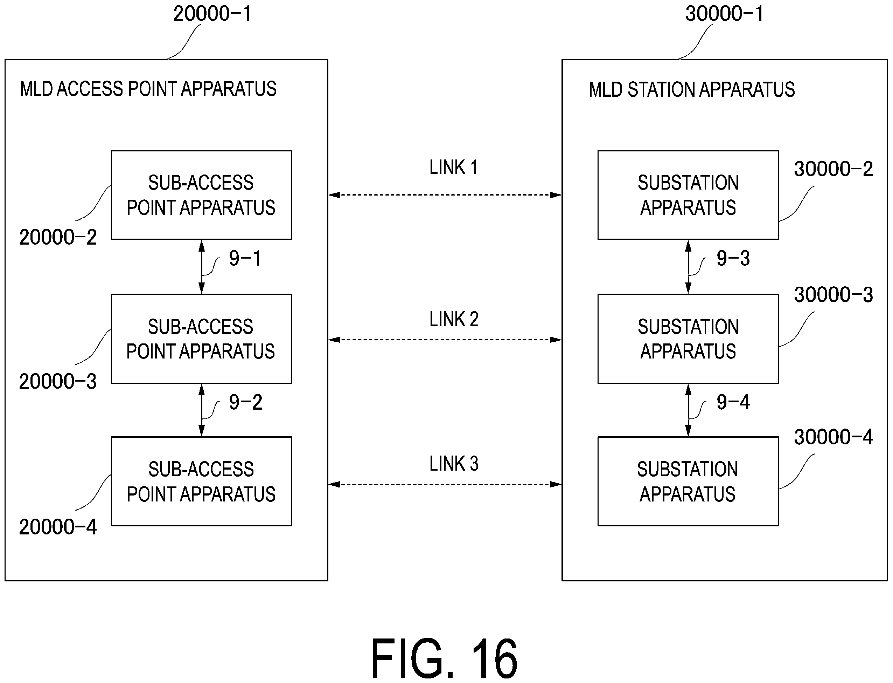

An MLD access point apparatus 20000-1 and an MLD station apparatus 30000-1 will be described with reference to FIG. 16. The MLD wireless communication apparatus includes multiple sub-wireless communication apparatuses corresponding to frequency bands (or channels or subchannels) of links constituting a multi-link (also referred to as a physical layer link). Although FIG. 16 illustrates an example in which the MLD access point apparatus 20000-1 includes three sub-wireless communication apparatuses, in this case, three sub-access point apparatuses (20000-2, 20000-3, and 20000-4), the number of sub-access point apparatuses is a free-selected number that is one or greater. Similarly, although FIG. 16 illustrates an example in which the MLD station apparatus 30000-1 includes three sub-wireless communication apparatuses, in this case, three substation apparatuses (30000-2, 30000-3, and 30000-4), the number of substation apparatuses is a free-selected number that is one or greater. Further, a sub-wireless communication apparatus (a sub-access point apparatus, a substation apparatus, or the like) may include a part of a circuit in the wireless communication apparatus, and may be referred to as a sub-wireless communication unit (a sub-access point unit or a substation unit).

Although FIG. 16 illustrates multiple sub-wireless communication apparatuses as logically separate blocks (squares) for the sake of explanation, they may be physically configured as one wireless communication apparatus. Alternatively, the wireless communication apparatuses may be physically configured as separate sub-wireless communication apparatuses, and in this case, each sub-access point apparatus transmits and/or receives necessary information through connection lines 9-1 and 9-2, and each substation apparatus transmits and/or receives necessary information through connection lines 9-3 and 9-4. In the present example, an MLD wireless communication apparatus is physically configured by one wireless communication apparatus (10000-1), and the configuration has the same details as that described above with reference to FIGS. 6 and 7.

Further, the number of sub-access point apparatuses included in one MLD access point apparatus and the number of substation apparatuses included in one MLD station apparatus vary depending on the grade, class, and capability of each MLD wireless communication apparatus. An MLD wireless communication apparatus of a higher grade, a higher class, or higher capability may include more sub-wireless communication apparatuses (sub-access point apparatuses and substation apparatuses) to be mounted. In other words, for each MLD wireless communication apparatus located in one wireless communication system, the number of sub-wireless communication apparatuses (sub-access point apparatuses and substation apparatuses) included in each MLD wireless communication apparatus may vary depending on the grade, class, and capability, and the numbers of the apparatuses need not be the same.

The substation apparatus 30000-2 is connected to (establishes Association with) the sub-access point apparatus 20000-2 and establishes a link 1. The substation apparatus 30000-3 is connected to (establishes Association with) the sub-access point apparatus 20000-3 and establishes a link 2. The substation apparatus 30000-4 is connected to (establishes Association with) the sub-access point apparatus 20000-4 and establishes a link 3. Although the number of links constituting a multi-link is three in the description of the present example, it is not limited to this and may be any number. In the description of the present example, the carrier frequency of the link 1 is assumed to be in the 2.4 GHz band, the carrier frequency of the link 2 is assumed to be in the 5 GHz band, and the carrier frequency of the link 3 is assumed to be in the 6 GHz band. However, the frequency used in each link can be freely configured from among the 2.4 GHz band, 5 GHz band, 6 GHz band, 60 GHz band, and other frequency bands, channels, and subchannels supported by the wireless communication system, and may be changed according to the legal regulations of each country.

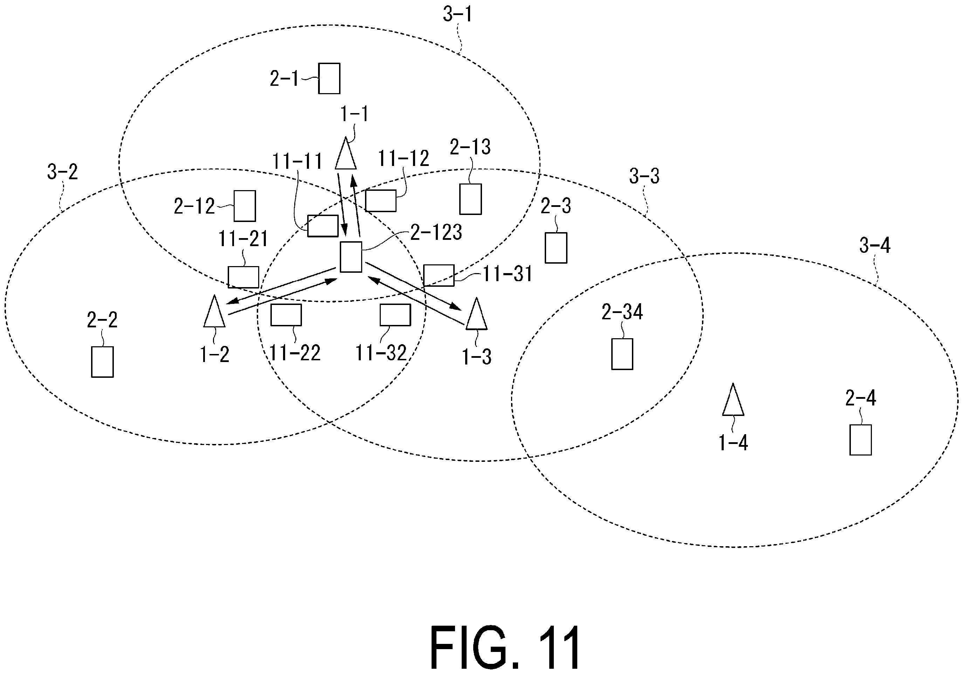

An example of a wireless communication system including station apparatuses and access point apparatuses according to the present embodiment will be described with reference to FIG. 11. FIG. 11 illustrates the access point apparatus 1-1, the station apparatuses 2-1, 2-12, 2-13, and 2-123 connected to the access point apparatus 1-1, the access point apparatuses 1-2 and 1-3 operating cooperatively with the access point apparatus 1-1, and the access point apparatus 1-4 not operating cooperatively with the access point apparatus 1-1 extracted from FIG. 5. In addition, station apparatuses 2-2, 2-3, 2-4, and 2-34 are also added for supplementary explanation. It is also assumed that a frame 11-11 is transmitted from the access point apparatus 1-1 to the station apparatus 2-123, a frame 11-12 is transmitted from the station apparatus 2-123 to the access point apparatus 1-1, a frame 11-21 is transmitted from the access point apparatus 1-2 to the station apparatus 2-123, a frame 11-22 is transmitted from the station apparatus 2-123 to the access point apparatus 1-2, a frame 11-31 is transmitted from the access point apparatus 1-3 to the station apparatus 2-123, and a frame 11-32 is transmitted from the station apparatus 2-123 to the access point apparatus 1-3. Here, it is assumed that the access point apparatuses 1-1, 1-2, 1-3, and 1-4 are access point apparatuses that support inter-access-point-apparatus cooperative operations. However, for example, in a case that the station apparatus 2A connected to the access point apparatus 1-1 is targeted, the communication area (coverage) of the access point apparatus 1-4 does not overlap with that of the access point apparatus 1-1. Therefore, in the present example, a case that the access point apparatus 1-4 cannot communicate with the station apparatus 2A in cooperation with the access point apparatus 1-1 will be described.

In addition, in a case that the access point apparatus 1-4 does not support an inter-access-point-apparatus cooperative operation, the access point apparatus 1-4 cannot operate in cooperation with another access point apparatus. For example, although the station apparatus 2-34 connected to the access point apparatus 1-3 is located within the communication area (coverage) of the access point apparatus 1-4, the station apparatus 2-34 only communicates with the access point apparatus 1-3, since the access point apparatuses 1-3 and 1-4 do not cooperatively operate with each other.

The method for inter-access-point-apparatus cooperative operations is not limited, and as an example, joint operation, coordinated operation, or the like may be used as described above.

In a case that an inter-access-point-apparatus cooperative operation such as a joint operation and a coordinated operation is performed, it is useful to report received signal quality information (also referred to as received signal statistics information) based on measurement of a received frame status from a neighbor access point apparatus, which is observed by the station apparatus, to the access point apparatus. Furthermore, if the received signal quality information includes content based on measurement of a received frame status from another station apparatus (reported STA), which is observed by a reporting station apparatus (reporting STA), this contributes to better joint operations and coordinated operations.

The received signal quality information, and frame reception statistics information, frame transmission statistics information, and traffic requirement information, which will be described below, are referred to as inter-access-point-apparatus coordination information (which may be referred to as inter-access-point-apparatus cooperative operation information, Multi-AP coordination information, Multi-AP cooperative operation information, inter-layer coordination information, and the like). The inter-access-point-apparatus coordination information may include any one of received signal quality information, frame reception statistics information, frame transmission statistics information, and traffic requirement information.

As the frame reception statistics information, for example, a part or all of pieces of information such as a Bit Error Rate (BER), a Frame Error Rate (FER), and a Block Error Rate (BLER) of a frame received by a station apparatus, the number of received data frames, and the number of received management frames may be used. In addition, the information is not limited to these pieces of information, and information indicating frame reception statistics may be used. As the frame transmission statistics information, for example, a part or all of pieces of information such as a frame collision rate, a retransmission rate, a CW time, a medium occupancy rate, a wireless medium busy rate, a wireless medium idle rate, and a Channel load at the time of frame transmission of a corresponding station apparatus may be used. The frame transmission statistics information is not limited to these examples, and may be statistics information related to frame transmission and/or reception.

Traffic Requirement (which may also be referred to as Traffic Specification, Traffic Classification, QoS Characteristics, and the like) information is a traffic requirement of an application operating in the application layer, and a part or all of pieces of information such as an average throughput, a maximum throughput, a minimum throughput, an allowable frame error rate, an allowable delay amount, an allowable jitter value, and the like may be used as an example.

Although some or all of a Received Signal Strength Indicator (RSSI), a Signal-to-Noise Ratio (SNR), a Signal-to-Interference-plus-Noise Ratio (SINR), a Channel Quality Indication (CQI) and the like may be used as the received signal quality value to be included in the inter-access-point-apparatus coordination information, the received signal quality value is not limited thereto and may be a value or an index for evaluating the received signal quality.

The inter-access-point-apparatus coordination information reported by a station apparatus (in this example, the station apparatus 2-123) to an access point apparatus (in this example, the access point apparatus 1-1) may be shared with (transmitted to) a Coordinator access point apparatus in addition to the access point apparatus 1-1. The information included in the received signal quality information can also be used by an access point apparatus other than the access point apparatus 1-1 with which an association is established (Association destination) to determine an access point apparatus having great influence, when viewed from the station apparatus 2-123. According to the reported content, the access point apparatus 1-1 (or the Coordinator access point apparatus) may determine inter-access-point-apparatus coordination indication information (also referred to as inter-access-point-apparatus cooperative operation indication information) indicating what cooperative operation the access point apparatus 1-1 performs with which access point apparatus. It is effective for the access point apparatus and the station apparatus 2-123 to transmit and/or receive frames in the determined cooperative operation. An example of the "access point apparatus having great influence" described above may be an access point apparatus having a large RSSI measured by the station apparatus 2-123, which is an example of information included in the received signal quality information. In other words, an access point apparatus having a large RSSI other than the access point apparatus 1-1 can be an interference factor in frame transmission and/or reception between the access point apparatus 1-1 and the station apparatus 2-123, and it is effective for the aforementioned access point apparatus to be set as a target of a cooperative operation. Further, it goes without saying that the index to determine the "access point apparatus having great influence" is not limited to RSSI.

A specific example of information included in the received signal quality information will be described using an RSSI as an example. For example, the station apparatus 2-123 is located in a place (overlapping place) where the communication areas (coverages) of the wireless communication systems 3-1, 3-2, and 3-3 overlap, and is located outside the communication area (coverage) of the wireless communication system 3-4. The station apparatus 2-123 measures an RSSI of a frame transmitted from each access point apparatus, and with the assumption that an RSSI value of the access point apparatus 1-1 is called RSSI_1, an RSSI value of the access point apparatus 1-2 is called RSSI_2, an RSSI value of the access point apparatus 1-3 is called RSSI_3, and an RSSI value of the access point apparatus 1-4 is called RSSI_4, reports the values to the access point apparatus 1-1 to which the station apparatus 2-123 is associated. For example, it is assumed that RSSI_1, RSSI_2, and RSSI_3 are equivalent values, and RSSI_4 is an unmeasurable value. In communication with the station apparatus 2-123, the access point apparatus 1-1 (or the Coordinator access point apparatus) may determine the access point apparatuses 1-2 and 1-3 having relatively large reported RSSIs as target candidates for the inter-access-point-apparatus cooperative operation, determine the access point apparatus 1-4 whose RSSI cannot be measured because it is outside the communication area as not a target candidate for the inter-access-point-apparatus cooperative operation, and perform the inter-access-point-apparatus cooperative operation according to these determination results.

As described above, the access point apparatus 1-1 (or the Coordinator access point apparatus) generates inter-access-point-apparatus coordination indication information. In a case that the access point apparatuses can wirelessly communicate with each other, the access point apparatuses may directly transmit and/or receive frames including the inter-access-point-apparatus coordination indication information. As an example, in a case that the access point apparatus 1-1 (or the Coordinator access point apparatus) can wirelessly communicate with a target access point apparatus (in this example, the access point apparatuses 1-2 and 1-3) of an inter-access-point-apparatus cooperative operation, the access point apparatus 1-1 may directly transmit and/or receive a radio frame including the inter-access-point-apparatus coordination indication information to and from the target access point apparatus. For example, the access point apparatus 1-1 transmits a frame including inter-access-point-apparatus coordination indication information to the access point apparatus 1-2 and the access point apparatus 1-3. The access point apparatuses 1-1, 1-2, and 1-3 may perform the inter-access-point-apparatus cooperative operation according to the shared inter-access-point-apparatus coordination indication information.

However, in the case of the example of FIG. 11, the access point apparatuses 1-2 and 1-3 are not located within the range of the communication area (coverage) 3-1 of the access point apparatus 1-1. In such a case, the access point apparatuses may have wired connection with each other via Ethernet (registered trade name) or the like, and the inter-access-point-apparatus coordination indication information may be transmitted from the access point apparatus 1-1 to the access point apparatuses 1-2 and 1-3 via wired communication.

As another method of transmitting the inter-access-point-apparatus coordination indication information, there is a method via a station apparatus. For example, the inter-access-point-apparatus coordination indication information is included in the frame 11-11 transmitted from the access point apparatus 1-1 to the station apparatus 2-123 for transmission. The station apparatus 2-123 that has received the frame 11-11 may include the inter-access-point-apparatus coordination indication information in the frame 11-21 and transmit the frame 11-21 to the access point apparatus 1-2. That is, the station apparatus 2-123 may relay the inter-access-point-apparatus coordination indication information received from the access point apparatus 1-1 to the access point apparatus 1-2. Similarly, the station apparatus 2-123 that has received the frame 11-11 may include the inter-access-point-apparatus coordination indication information in the frame 11-31 and transmit the frame 11-31 to the access point apparatus 1-3. That is, the station apparatus 2-123 may relay the inter-access-point-apparatus coordination indication information received from the access point apparatus 1-1 to the access point apparatus 1-3. In this way, the station apparatus 2-123 may operate as a relay apparatus that relays the inter-access-point-apparatus coordination indication information received from the access point apparatus to multiple access point apparatuses other than the aforementioned access point apparatus.

The inter-access-point-apparatus coordination indication information may be transmitted to a target access point apparatus (in this example, the access point apparatuses 1-2 and 1-3) of the inter-access-point-apparatus cooperative operation in a unicast frame (Unicast frame or Individually addressed frame), a multicast frame (Multicast frame or Group addressed frame), or a broadcast frame. The inter-access-point-apparatus coordination indication information may be transmitted to the target access point apparatus of the inter-access-point-apparatus cooperative operation.

The access point apparatuses (in this example, the access point apparatuses 1-1, 1-2, and 1-3) sharing the inter-access-point-apparatus coordination indication information may use the inter-access-point-apparatus coordination indication information for inter-access-point-apparatus cooperative operations.

The inter-access-point-apparatus coordination indication information includes information related to a method of inter-access-point-apparatus cooperative operations (which is also referred to as an operation mode, and specifies an operation mode such as a joint operation or a coordinated operation). In a case that the joint operation is specified, information indicating an operation mode such as Joint Transmission (Joint Tx), Joint OFDMA, or Joint Beam Forming (BF) may be included as an example. In a case that the Coordinated Operation is specified, information indicating an operation mode such as Coordinated OFDMA, Coordinated Spatial Reuse (SR), Coordinated Beam Forming (BF), Coordinated TXOP Sharing, or Coordinated Time Division Multiple Access (TDMA) may be included as an example.

The inter-access-point-apparatus coordination indication information may include a list of access point apparatuses that perform cooperative operations. In the case of the example of FIG. 11, since the access point apparatuses 1-1, 1-2, and 1-3 cooperatively operate with respect to the station apparatus 2-123, the list of cooperatively operating access point apparatuses may include information (identification information such as BSSID and individual identification information corresponding thereto) related to the access point apparatuses 1-1, 1-2, and 1-3.

The inter-access-point-apparatus coordination indication information may include information for performing time synchronization of the access point apparatuses. For example, the inter-access-point-apparatus coordination indication information may include a Time Synchronization Function (TSF) of the access point apparatuses and an offset of the TSF between the access point apparatuses (TSF offset). For example, the inter-access-point-apparatus coordination indication information may include the TSF of the access point apparatus 1-1 in the inter-access-point-apparatus coordination indication information in order for the access point apparatuses 1-1, 1-2, and 1-3 to transmit frames in time synchronization. The access point apparatuses 1-2 and 1-3 may calculate each offset of the TSF with reference to the TSF of the access point apparatus 1-1.

Examples of the frame as a measured object of the station apparatus that creates the received signal quality information include a wireless management frame, a wireless control frame, and the like transmitted by the access point apparatus. A beacon frame as an example of a wireless management frame is a frame including capability information of an access point apparatus, and the access point apparatus broadcasts the beacon frame not only to a specific station apparatus but also to neighbor wireless communication apparatuses. Therefore, the beacon frame is suitable for obtaining standard (normal) transmission characteristics and signal quality of the access point apparatus.

In addition, in order to recognize a communication condition, a station apparatus that creates received signal quality information may include, as a measured object, a frame transmitted and/or received by a neighbor access point apparatus to and from another specific station apparatus, in addition to the beacon frame. A unicast frame (Unicast frame or Individually addressed frame), a multicast frame (Multicast frame or a Group addressed frame), and the like may also be included in the measured object.

In addition, in a case that the station apparatus that creates the received signal quality information sets a frame such as a unicast frame or a multicast frame to which beamforming is applied for the other specific station apparatus as a measured object, a measured RSSI may be greater than the RSSI of a broadcast frame such as a beacon. In this case, the station apparatus that creates the received signal quality information may report the received signal quality information created in consideration of the received signal quality of the frame unicast (or multicast) to the other specific station apparatus to the access point apparatus with which an association is established.

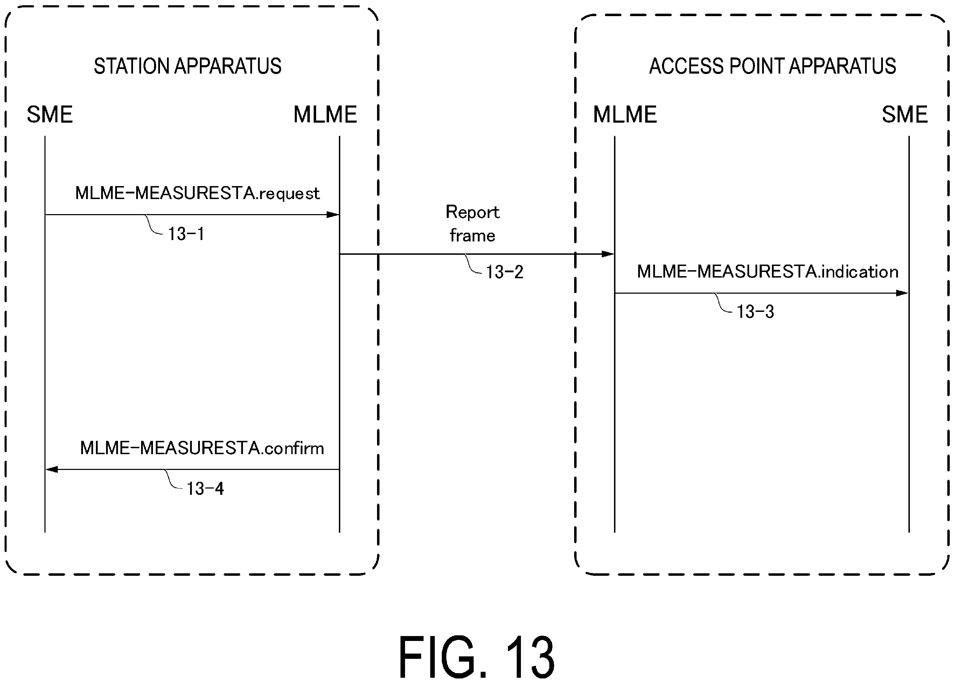

FIG. 13 illustrates an example of Primitives exchanged between wireless communication apparatuses and frames exchanged between the wireless communication apparatuses in a case that a station apparatus measures the received signal quality of a neighbor access point apparatus. Here, the Primitive name is MEASURESTA as an example. In order to check the status of the frame received from the neighbor access point apparatus, the station apparatus issues Primitive MLME-MEASURESTA.request 13-1 from the SME to the MLME for indication. In a case that the indication is received, the MLME indicates the MAC layer and the PHY layer to receive a frame transmitted by the neighbor access point apparatus and measure the received signal quality.

The station apparatus includes inter-access-point-apparatus coordination information including the received signal quality information of the frame received from the neighbor access point apparatus in Report frame 13-2 for transmission, and the access point apparatus receives the inter-access-point-apparatus coordination information. The MLME of the access point apparatus reports the inter-access-point-apparatus coordination information included in Report frame 13-2 to the SME in Primitive MLME-MEASURESTA.indication 13-3, and the reported content may also be used by a higher layer. Here, the higher layer means a layer above the MAC layer, and the higher layer includes an application layer. This means that the application layer of the access point apparatus can use the inter-access-point-apparatus coordination information including the received signal quality information of the neighbor access point apparatus acquired by the station apparatus. In addition, the inter-access-point-apparatus coordination information can be shared by (transmitted from) the access point apparatus to (with) the Coordinator access point apparatus in the Multi-AP wireless communication system.

The SME of the access point apparatus, the higher layer of the access point apparatus, or the Coordinator access point apparatus in the Multi-AP wireless communication system may use the received inter-access-point-apparatus coordination information to determine what kind of cooperative operation the access point apparatus performs with which access point apparatus.

As an example, the MLME of the station apparatus may report the inter-access-point-apparatus coordination information included in Report frame 13-2 to the SME in Primitive MLME-MEASURESTA.confirm 13-4. The reported content may also be used by the higher layer. That is, the station apparatus can use the received signal quality information of a neighbor access point apparatus acquired by the station apparatus itself and other information included in the inter-access-point-apparatus coordination information (frame reception statistics information, frame transmission statistics information, and the like) in the higher layer of its own.

The SME of the station apparatus or the higher layer of the station apparatus may change the traffic requirement information according to the received inter-access-point-apparatus coordination information. For example, in a case that the wireless medium busy rate is high with reference to frame transmission statistics information, the average throughput value of the traffic requirement information may be lowered assuming that the wireless communication environment is poor. In addition, the value included in the traffic requirement information may be changed according to the value included in each of the received signal quality information, the frame reception statistics information, and the frame transmission statistics information included in the inter-access-point-apparatus coordination information.

Further, although it has been described above that the station apparatus transmits Report frame 13-2 to the access point apparatus with which an association is established (Association destination) after the station apparatus is connected to (establishes Association with) the access point apparatus, the station apparatus may transmit Report frame 13-2 to an access point apparatus other than the association destination or may broadcast the frame without limiting the destination of Report frame 13-2. In addition, Report frame 13-2 may be transmitted before the station apparatus is connected to (establishes Association with) the access point apparatus.

Report frame 13-2 is a frame spontaneously transmitted by the station apparatus without being solicited (also referred to as "triggered") from the access point apparatus, and a frame transmitted from the station apparatus in such a procedure is also referred to as an unsolicited frame. In addition, this method (also referred to as an "approach" or a "mode") is referred to as an "unsolicited mode".

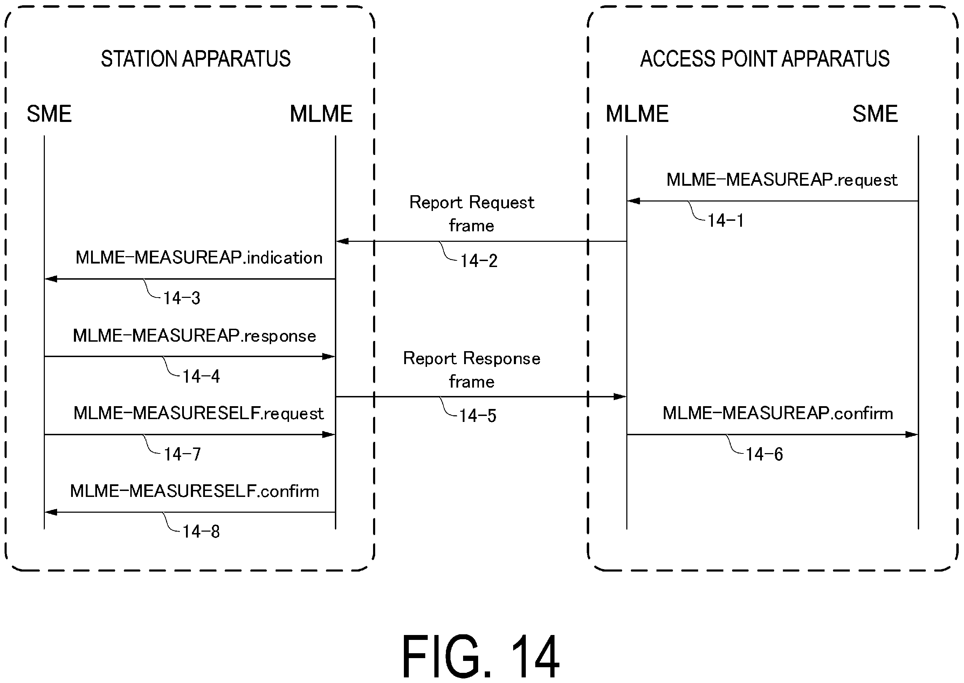

Although the case that the station apparatus transmits the inter-access-point-apparatus coordination information in the unsolicited frame has been described with reference to FIG. 13, a case of a solicited frame which is solicited (also referred to as "triggered") by an access point apparatus to transmit the inter-access-point-apparatus coordination information by the station apparatus will be described with reference to FIG. 14. This method (also referred to as an "approach" or a "mode") is referred to as a "solicited mode".

FIG. 14 illustrates an example of Primitives exchanged between wireless communication apparatuses and frames exchanged between the wireless communication apparatuses in a case that a station apparatus receives a request from a neighbor access point apparatus to measure the received signal quality of the access point apparatus. Here, the Primitive name is MEASUREAP as an example. In order to request inter-access-point-apparatus coordination information (including received signal quality information and the like) from the station apparatus, the access point apparatus issues Primitive MLME-MEASUREAP.request 14-1 from its SME to MLME for an indication. The MLME having received the indication transmits a Report Request frame 14-2 to the station apparatus, and the station apparatus receives the Report Request. The station apparatus issues MLME-MEASUREAP.indication 14-3 from its MLME to SME, and the SME issues MLME-MEASUREAP.response 14-4 to the MLME. This operation corresponds to giving an indication to the MAC layer and the PHY layer to receive a frame transmitted by a neighbor access point apparatus and measure the received signal quality.

The station apparatus includes the inter-access-point-apparatus coordination information including the received signal quality information in a Report Response frame 14-5 for transmission, and the access point apparatus receives the frame. The MLME of the access point apparatus reports the inter-access-point-apparatus coordination information (including the received signal quality information) included in the Report Response frame 14-5 to the SME by using Primitive MLME-MEASUREAP. confirm 14-6, and the reported content may also be used in a higher layer. Here, the higher layer means a layer above the MAC layer, and the higher layer includes an application layer. This means that the application layer of the access point apparatus can use the inter-access-point-apparatus coordination information including the received signal quality information of the neighbor access point apparatus acquired by the station apparatus. In addition, the inter-access-point-apparatus coordination information can be shared by (transmitted from) the access point apparatus to (with) the Coordinator access point apparatus in the Multi-AP wireless communication system.

The station apparatus can extract the inter-access-point-apparatus coordination information reported to the access point apparatus by Report Response frame 14-5 and transmit the inter-access-point-apparatus coordination information to the SME of the station apparatus or a higher layer of the station apparatus. Here, the Primitive name is MEASURESELF as an example. The SME transmits MLME-MEASURESELF.request 14-7 to the MLME. The MLME reports the content corresponding to the inter-access-point-apparatus coordination information included in the Report Response frame 14-5 or a part thereof to the SME by using Primitive MLME-MEASURESELF.confirm 14-8, and the reported information can also be used in the higher layer.

Further, although it has been described above that the station apparatus transmits the Report Response frame 14-5 to the access point apparatus with which an association is established (Association destination), the station apparatus may transmit the frame to an access point apparatus other than the association destination or may broadcast the frame without limiting the destination. In addition, the access point apparatus may transmit the Report Request frame 14-2 to a station apparatus which is not connected (with which Association is not established) (Unassociated STA), and in response to this, the station apparatus may transmit the Report Response frame 14-5 to the access point apparatus. Also in the case of the Unassociated STA, the Report Response frame 14-5 may be broadcast without limiting the destination.

The SME of the access point apparatus, the higher layer of the access point apparatus, or the Coordinator access point apparatus in the Multi-AP wireless communication system may use the inter-access-point-apparatus coordination information to determine what kind of cooperative operation the access point apparatus performs with which access point apparatus.

The inter-access-point-apparatus coordination information created by the station apparatus may include information other than the received signal quality. For example, some or all of frame reception statistics information and frame transmission statistics information as statistics information related to frame transmission and/or reception by the station apparatus may be included. Examples of the frame reception statistics information include a Bit Error Rate (BER), a Frame Error Rate (FER), and a Block Error Rate (BLER) of a frame received by the station apparatus, the number of received data frames, the number of received management frames, and the like. Examples of the frame transmission statistics information include a frame collision rate, a retransmission rate, a CW time, a medium occupancy rate, a medium busy rate, a medium idle rate, and a Channel load at the time of frame transmission of the station apparatus. The frame transmission statistics information is not limited to these examples, and may be statistics information related to frame transmission and/or reception.

The information from the higher layer can be included in the primitive MLME-MEASURESTA.request 13-1 of FIG. 13 and the primitive MLME-MEASUREAP. response 14-4 of FIG. 14 issued by the station apparatus from the SME to the MLME. These Primitives may include traffic requirement values of applications operating in the application layer. For example, in a case that an application is a video playback application, information indicating traffic requirement information desired by the application such as an average throughput, a maximum throughput, a minimum throughput, an allowable frame error rate, an allowable delay amount, and an allowable jitter value required for video playback may be included. Further, traffic requirement information may be included in the inter-access-point-apparatus coordination information.

Although FIG. 13 is illustrated as an example of the Primitive sequence in the unsolicited mode, not all the Primitives are necessarily performed, and another Primitive may be additionally executed. Although FIG. 14 is illustrated as an example of the Primitive sequence in the solicited mode, not all the Primitives are necessarily executed, and another Primitive may be additionally executed. The verbs "request", "confirm", "indication", and "response" at the end of the Primitive names may be different from the verbs illustrated in FIGS. 13 and 14.

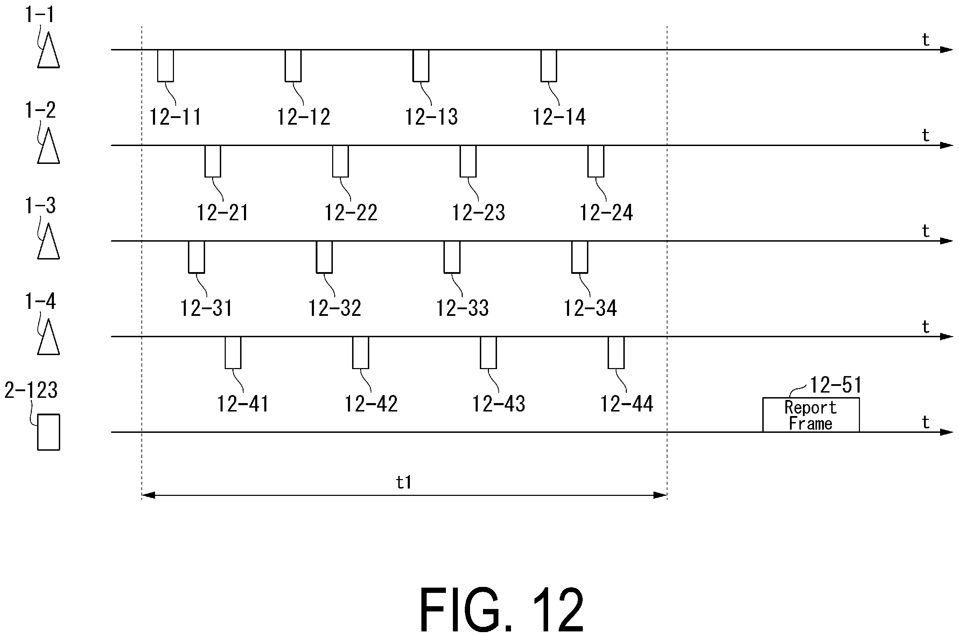

A case that the station apparatus measures the received signal quality from the RSSI of the beacon frame of the neighbor access point apparatus will be described using the frame transmission and/or reception diagram of FIG. 12 as an example.

Here, a measurement time is set to 11, and the measurement time may be a fixed value, may be a variable value, or may be determined by negotiation at the time of Association. The measurement time t1 may be configured in a MIB. The measurement time t1 may be configured in a Primitive. In the case of the unsolicited mode, the station apparatus in FIG. 13 issues the Primitive MI,ME-MEASURESTA.request 13-1 or the like to the MLME from the SME to indicate the measurement time t1. In the case of the solicited mode, the access point apparatus of FIG. 14 issues the Primitive MI,ME-MEASUREAP.request 14-1 from the SME to the MLME, and indicates the measurement time t1 to the MLME of the station apparatus by using the Report Request frame 14-2 or the like transmitted in response thereto. As in the above-described method for determining the measurement time t1, parameters related to measurement of received signal qualities such as the type of a frame as a measured object (a beacon frame, a unicast frame, a multicast frame, a management frame, a data frame, a control frame, or the like) and the number of frames may be determined.

Although only a minimum number of frames necessary for explanation are illustrated in FIG. 12, other frames may be actually transmitted and/or received. Although the measurement time t1 is specified in the description, the type of a frame and the number of frames may be used as other parameters. It is assumed that a wireless LAN access point apparatus 1-1 transmits beacon frames 12-11, 12-12, 12-13, and 12-14, a wireless LAN access point apparatus 1-2 transmits beacon frames 12-21, 12-22, 12-23, and 12-24, a wireless LAN access point apparatus 1-3 transmits beacon frames 12-31, 12-32, 12-33, and 12-34, and a wireless LAN access point apparatus 1-4 transmits beacon frames 12-41, 12-42, 12-43, and 12-44. The wireless LAN station apparatus 2-123 calculates an RSSI as received signal quality information of the wireless LAN access point apparatus 1-1 from the beacon frames 12-11, 12-12, 12-13, and 12-14, an RSSI as received signal quality information of the wireless LAN access point apparatus 1-2 from the beacon frames 12-21, 12-22, 12-23, and 12-24, an RSSI as received signal quality information of the wireless LAN access point apparatus 1-3 from the beacon frames 12-31, 12-32, 12-33, and 12-34, and an RSSI as received signal quality information of the wireless LAN access point apparatus 1-4 from the beacon frames 12-41, 12-42, 12-43, and 12-44 during the period of the designated measurement time t1. For the calculation of the RSSI as the received signal quality information, a mean value, a maximum value, a minimum value, and the like thereof in the measurement time t1 are used.

For the received signal quality information, a frame as a measured object may be created from all the frames received in the measurement time t1, or may be created from some of the frames. For example, when the received signal quality information of the access point apparatus 1-3 is created, all of the frames 12-31, 12-32, 12-33, and 12-34 may be used, or only the frames 12-31 and 12-32 may be used as a part of the frames. Although FIG. 12 illustrates only beacon frames that are broadcast as a target for creating received signal quality information, other frame types such as a unicast frame (Unicast frame or Individually addressed frame), a broadcast frame (Broadcast frame), and a multicast frame (Multicast frame or a Group addressed frame) may be set as a measured object according to negotiation, MIB, and Primitive at the time of Association described above.

The station apparatus 2-123 reports the measurement result of the received signal qualities of the neighbor wireless LAN access point apparatuses in the measurement time t1 to the access point apparatus by using a Report frame 12-51 (also referred to as a Report Response frame 12-51). The frame 12-51 may be unicast (Unicast or Individually addressed) only to the access point apparatus 1-1 with which an association is established (Association destination). The inter-access-point-apparatus coordination information included in the Report frame 12-51 may be shared by the Coordinator access point apparatus from the access point apparatus 1-1 with which an association is established (Association destination). The Report frame 12-51 may be broadcast (Broadcast) or multicast (Multicast or Group addressed) so as to be received by other access point apparatuses. The wireless LAN access point apparatus 1-1 (or the Coordinator access point apparatus) may recognize the situation of the neighbor access point apparatuses of the station apparatus 2-123 from the inter-access-point-apparatus coordination information indicated by the Report frame 12-51, and determine how to cooperatively operate with other access point apparatuses for communication with the station apparatus 2-123.

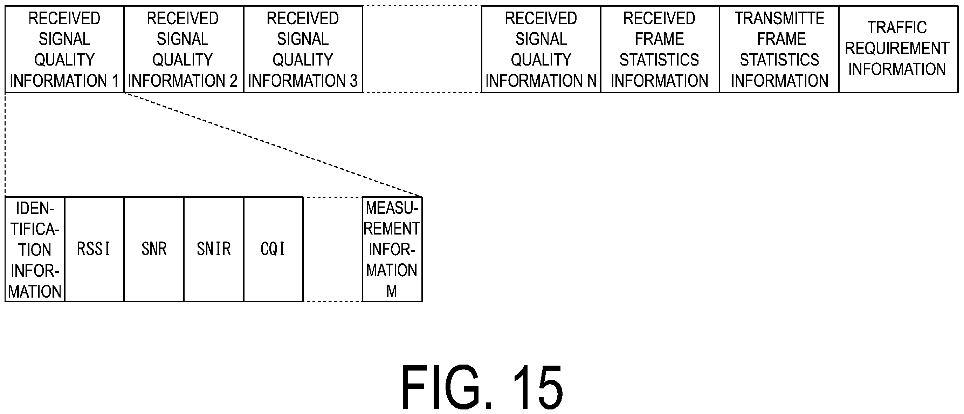

An example of the format of the Report frame 12-51 (also referred to as a "Report Response frame 12-51) transmitted by the station apparatus 2-123 is illustrated in FIG. 15. Further, the PHY header, the MAC header, and the like are omitted. The Report frame 12-51 includes inter-access-point-apparatus coordination information. The inter-access-point-apparatus coordination information may include at least one of received signal quality information, frame reception statistics information, frame transmission statistics information, traffic requirement information, and the like.

In a case of the wireless communication systems illustrated in FIG. 11, the station apparatus 2-123 can receive frames of the access point apparatuses 1-1, 1-2, and 1-3, and the Report frame 12-51 includes the measurement results of the access point apparatuses 1-1, 1-2, and 1-3. On the other hand, since the station apparatus 2-123 is able to receive no frames from the access point apparatus 1-4, the measurement result of the access point apparatus 1-4 may not be included in the Report frame 12-51. The received signal quality information is information related to the signal quality of a frame transmitted from a neighbor access point apparatus of the station apparatus 2-123, and includes information such as RSSI, SNR, SNIR, and CQI, and for identification information, some or all of pieces of information such as the corresponding BSSID and SSID as information for identifying an access point apparatus may be used for identification information. For example, received signal quality information 1 corresponds to received signal quality information for the access point apparatus 1-1, received signal quality information 2 corresponds to received signal quality information for the access point apparatus 1-2, and received signal quality information 3 corresponds to received signal quality information for the access point apparatus 1-3. The information of the access point apparatus 1-1 to which the station apparatus 2-123 is connected (with which Association is established) may or may not be included in inter-access-point-apparatus coordination information.

As an example, in the inter-access-point-apparatus coordination information, pieces of the received signal quality information of access point apparatuses may be arranged in the order of access point apparatuses having a signal quality determined to be better by the station apparatus or in the order of access point apparatuses being recommended as a cooperation destination. In the case of the example of FIG. 15, for an order of the access point apparatuses having better received signal quality values or being preferred cooperation destinations, the station apparatus may set the received signal quality information 1, the received signal quality information 2, and the received signal quality information 3, in this order or may set the pieces of the information in the reversed order. However, it is not always necessary to arrange the pieces of the received signal quality information based on criteria for the station apparatus, and the access point apparatus that has received the Report frame 12-51 may determine the signal quality of the respective access point apparatuses based on criteria at the access point apparatus side.

There may be a difference in content of the inter-access-point-apparatus coordination information included in the Report frame 12-51 (also referred to as a "Report Response frame 12-51 ") between the case of the solicited mode and the case of the unsolicited mode. For example, although traffic requirement information may be included in the unsolicited mode, the traffic requirement information may not be included in the solicited mode. For example, traffic requirement information may be included in the solicited mode without including the traffic requirement information in the unsolicited mode. The information serving as the difference is not limited to the traffic requirement information and may be other information (received signal quality information, frame reception statistics information, frame transmission statistics information, or the like).

It has been described so far that, in the Multi-AP wireless communication system, the station apparatus reports the measuring result of the signal quality of the frame transmitted from a neighbor access point apparatus to the access point apparatus, and the access point apparatus determines a combination of access point apparatuses performing an inter-access-point-apparatus cooperative operation according to the reported details.

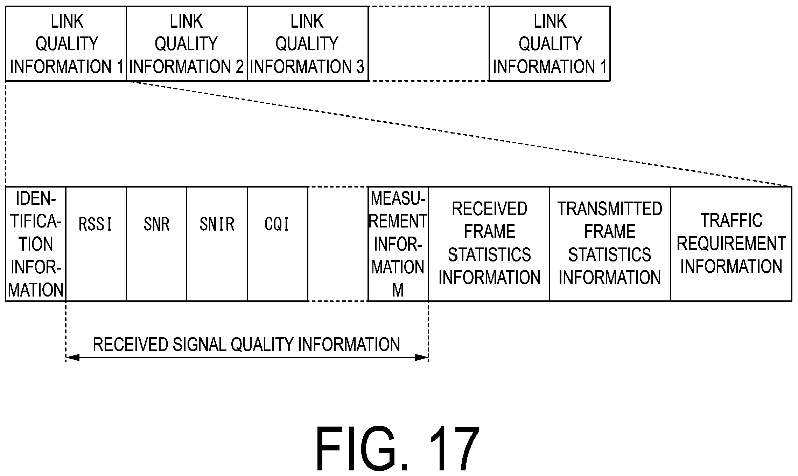

In a case that the station apparatus is an MLD, the signal quality of each of multiple frequencies (multi-link) may be measured. An example of the format of the Report frame 12-51 (also referred to as a "Report Response frame 12-51) is illustrated in FIG. 17. The inter-access-point-apparatus coordination information includes multiple pieces of link quality information. Link quality information 1 includes information about link 1 (for example, a frequency in the 2.4 GHz band), link quality information 2 includes information about link 2 (for example, frequency in the 5 GHz band), link quality information 3 includes information about link 3 (for example, a frequency in the 6 GHz band), and multiple pieces of link quality information that is likely to be used by an MLD. Although each piece of link quality information includes identification information, received signal quality information, frame reception statistics information, frame transmission statistics information, traffic requirement information, and the like, the aforementioned information does not necessarily include all the pieces of the information. The identification information here is information for identifying a link (Link ID or the like).

In a case that the SME of the station apparatus issues Primitive MLME-MEASURESTA.request for requesting measurement to the MLME in FIG. 13, the MLME creates link quality information of multiple frequencies (Multi-link) constituting an MLD or multiple frequencies (Multi-link) that are likely to be used in an MLD, and reports the link quality information to the access point apparatus with which an association is established in the Report frame 13-2. In addition, the MLME reports the content corresponding to the inter-access-point-apparatus coordination information included in the Report frame 13-2 or a part thereof to the SME by using Primitive MLME-MEASURESTA.confirm, and the reported information can also be used in the higher layer. Here, the higher layer means a layer above the MAC layer, and the higher layer includes an application layer. The higher layer may use the link quality information included in the received inter-access-point-apparatus coordination information to determine which application is mapped to which link and which Traffic ID (TID) is mapped to which link (frequency) (TID-to-Link Mapping). The higher layer may use the received link quality information for an inter-access-point-apparatus cooperative operation.

Each application can also select a link according to its traffic request to communicate. For example, it is assumed that the communication condition of the link 1 is the best and the signal quality becomes worse in the order of the link 2 and the link 3. With respect to desired bit rates of applications, in a case that application 1 is the highest and application 2 and application 3 are lower in this order, if use of applications is assigned such that the application 1 is mapped to the link 1, the application 2 is mapped to the link 2, and the application 3 is mapped to the link 3, optimization for making all the applications operate properly can also be performed.

As another use application, a neighbor station apparatus may be a measured object, rather than a neighbor access point apparatus. If a station apparatus is extended to measure the signal quality of a frame transmitted from another station apparatus, a certain station apparatus can also be used to determine selection of another optimal station apparatus for P2P communication, Tunneled Direct Link Setup (TDLS) communication, or the like, which is inter-station-apparatus communication.

### 2. Matters Common for All Embodiments

Although the communication apparatuses according to the present invention can perform communication in a frequency band (frequency spectrum) that is a so-called unlicensed band that does not require permission to use from a country or a region, available frequency bands are not limited thereto. The communication apparatus according to the present invention can exhibit its effects also in a frequency band called a white band, which is actually not used for the purpose of preventing interference between frequencies and the like even though permission to use the frequency band is given from a country or a region for a specific service (for example, a frequency band that is allocated for television broadcasting but is not used depending on regions), or in a shared spectrum (shared frequency band) which is expected to be shared by multiple service providers, for example.

A program that operates in the wireless communication apparatuses according to the present invention is a program (a program for causing a computer to function) for controlling a CPU or the like to implement the functions of the aforementioned embodiments related to the present invention. In addition, information handled by these apparatuses is temporarily accumulated in a RAM at the time of processing, is then stored in various types of ROMs and HDDs, and is read by the CPU as necessary to be corrected and written. A semiconductor medium (for example, a ROM, a non-volatile memory card, or the like), an optical recording medium (for example, a DVD, an MO, an MD, a CD, a BD, or the like), a magnetic recording medium (for example, a magnetic tape, a flexible disk, or the like), and the like can be examples of recording media for storing programs. In addition to implementing the functions of the aforementioned embodiments by performing loaded programs, the functions of the present invention may be implemented in processing performed in cooperation of an operating system, other application programs, and the like based on instructions of those programs.

In a case of delivering these programs to market, the programs can be stored and distributed in a portable recording medium, or transferred to a server computer connected via a network such as the Internet. In this case, a storage device serving as the server computer is also included in the present invention. In addition, a part or the entirety of the communication apparatuses in the aforementioned embodiments may be implemented as an LSI that is typically an integrated circuit. The functional blocks of the communication apparatuses may be individually implemented as chips or may be partially or completely integrated into a chip. In a case that the functional blocks are made as integrated circuits, an integrated circuit controller for controlling them is added.

In addition, the circuit integration technique is not limited to LSI, and may be realized as a dedicated circuit or a multi-purpose processor. Moreover, in a case that a circuit integration technology that substitutes LSI appears with the advance of the semiconductor technology, it is also possible to use an integrated circuit based on the technology.

Further, the invention of the present application is not limited to the above-described embodiments. The wireless communication apparatuses according to the invention of the present application is not limited to the application to mobile station apparatuses, and, of course, can be applied to a stationary-type or non-movable electronic device installed indoors or outdoors, for example, an AV device, a kitchen device, a cleaning or washing machine, an air-conditioning device, an office device, a vending machine, and other household appliances.

Although the embodiments of the invention have been described in detail above with reference to the drawings, a specific configuration is not limited to the embodiments, and designs and the like that do not depart from the essential spirit of the invention also fall within the claims.

### Industrial Applicability

The present invention can be preferably used for a communication apparatus and a communication method.

### Reference Signs List

1-1, 1-2, 1-3, 1-4 Access point apparatus
2-1, 2-12, 2-13, 2-123, 2-2, 2-21, 2-23, 2-213, 2-3, 2-31, 2-32, 2-34, 2-312, 2-4 Station apparatus
3-1, 3-2, 3-3, 3-4 Communication area (coverage)
10001-1 Higher layer unit
10002-1 Autonomous distributed controller
10002a-1 CCA unit
10002b-1 Backoff unit
10002c-1 Transmission determination unit
10003-1 Transmitter
10003a-1 Physical layer frame generator
10003b-1 Wireless transmitter
10004-1 Receiver
10004a-1 Wireless receiver
10004b-1 Signal demodulator
10005-1 Antenna unit
9-1, 9-2, 9-3, 9-4, 9-5, 9-6 Primitive
11-1, 11-2, 11-3 Frame
12-1 to 12-14, 12-21 to 12-24, 12-31 to 12-34, 12-41 to 12-44, 12-51 Frame
13-1, 13-3, 13-4 Primitive
14-1, 14-3, 14-4, 14-6, 14-7, 14-8 Primitive
20000-1 MLD access point apparatus
13-2, 14-2, 14-5 Frame
20000-2, 20000-3, 20000-4 Sub-access point apparatus
30000-1 MLD station apparatus
30000-2, 30000-3, 30000-4 Substation apparatus

## Claims

1. A station apparatus communicating with an access point apparatus, the station apparatus comprising:
a receiver configured to establish an association with a first access point apparatus and receive frames transmitted by multiple access point apparatuses including the first access point apparatus; and
a transmitter configured to transmit a wireless management frame, wherein
the wireless management frame includes received signal quality information generated by measuring each of the frames transmitted by the multiple access point apparatuses as a measured object,
the wireless management frame is transmitted as a solicited frame in a case that the received signal quality information is requested from the first access point apparatus,
at least one of a first method or a second method is performed in a case that the received signal quality information is not requested from the first access point apparatus,
the first method includes issuing, from an MLME to an SME of the station apparatus, a primitive including the received signal quality information, and
the second method includes transmitting the wireless management frame as an unsolicited frame.

2. The station apparatus according to claim 1, wherein performing the first method and the second method is indicated in a primitive from the SME to the MLME of the station apparatus.

3. The station apparatus according to any of the preceding claims, wherein the received signal quality information includes at least one of an RSSI, an SNR, an SINR, or a CQI of the multiple access point apparatuses.

4. The station apparatus according to any of the preceding claims, wherein the received signal quality information includes capability information of the multiple access point apparatuses.

5. The station apparatus according to any of the preceding claims, wherein content of the received signal quality information included in the solicited frame and content of the received signal quality information included in the unsolicited frame are different from each other.

6. The station apparatus according to any of the preceding claims, wherein the received signal quality information includes traffic requirement information of a higher layer.

7. An access point apparatus communicating with a station apparatus, the access point apparatus comprising:
a transmitter configured to
establish an association with a first station apparatus, and
transmit a frame; and
a receiver configured to receive a frame, wherein
an unsolicited frame including received signal quality information transmitted by the first station apparatus is received, and
the received signal quality information is generated, by the first station apparatus, by measuring each frame transmitted by multiple access point apparatuses including the connected access point apparatus as a measured object.

8. A communication method used in a communication system including a station apparatus, a first access point apparatus communicating with the station apparatus, and one or more access point apparatuses other than the first access point apparatus, the communication method comprising:
establishing, by the station apparatus, an association with the first access point apparatus;
receiving, by the station apparatus, frames transmitted by multiple access point apparatuses including the first access point apparatus;
transmitting, by the station apparatus, a wireless management frame,
the wireless management frame including received signal quality information generated by measuring each of the frames transmitted by the multiple access point apparatuses as a measured object,
transmitting, by the station apparatus, the wireless management frame as a solicited frame in a case that the received signal quality information is requested from the first access point apparatus; and
performing, by the station apparatus, at least one of a first method or a second method in a case that the received signal quality information is not requested from the first access point apparatus,
the first method including issuing, from an MLME to an SME, a primitive including the received signal quality information, and
the second method including transmitting the wireless management frame as an unsolicited frame.
